# EUROPEAN PATENT SPECIFICATION

(11) **EP 4 536 742 B1**
(45) Date of publication and mention of the grant of the patent: **23.09.2026**
(21) Application number: 23734364.5
(22) Date of filing: 05.06.2023
(51) Int. Cl.: C08K 3/36, C08K 5/54, C08L 9/06, B60C 1/00

(54) **PROCESS FOR PREPARING COMPOUNDS FOR TYRES AND TYRES COMPRISING THEM**
VERFAHREN ZUR HERSTELLUNG VON VERBINDUNGEN FÜR REIFEN UND REIFEN DAMIT
PROCÉDÉ DE PRÉPARATION DE COMPOSÉS POUR PNEUS ET PNEUS LES COMPRENANT

(30) Priority: 08.06.2022 IT 202200012146
(43) Date of publication of application: 16.04.2025
(73) Proprietor: Pirelli Tyre S.p.A., 20126 Milano (IT)
(72) Inventor: SUSANNA, Antonio, 20126 Milano (IT); DONETTI, Raffaella, 20126 Milano (IT); HANEL, Thomas, 20126 Milano (IT); MILANA, Paola, 20126 Milano (IT); SCOTTI, Roberto, 20126 Milano (IT); MOSTONI, Silvia, 20126 Milano (IT); DI CREDICO, Barbara, 20126 Milano (IT); D'ARIENZO, Massimiliano, 20126 Milano (IT)
(74) Representative: PGA S.p.A.
(86) International application number: PCT/IB2023/055771
(87) International publication number: WO 2023/238007

(56) References cited:
- WO-A1-2018/101914
- WO-A1-2020/110023
- CN-A- 101 775 263

## Description

### FIELD OF THE INVENTION

The present invention relates to a process for preparing elastomeric compounds for tyres capable of vulcanising effectively without the introduction of zinc, characterised by the incorporation of specific modified fillers capable of activating the vulcanisation.

### STATE OF THE ART

In the tyre industry, vulcanisation is a process commonly used to improve the mechanical properties of natural rubber or unsaturated polymers, a process that affects hardness, elasticity, hysteresis of the material at different temperatures and, consequently, behaviour of the tyre on wet as well as friction and abrasion thereof during use.

Over the years, various additives have been proposed to improve the vulcanisation process as vulcanisation activators and accelerants.

In general, with these additives, it is desired to increase the degree and homogeneity of the cross-linking while decreasing the energy and the time required to complete the reaction.

The main vulcanisation activators, capable of increasing the efficiency of the process, are inorganic compounds such as metal oxides and hydroxides, for example ZnO, MgO, Ca(OH)₂.

Among the different activators, zinc oxide ZnO is considered the most efficient and is still in use today in many vulcanisation processes. This activator is used in combination with weak organic acids (e.g. stearic acid) which promote the activity thereof in the rubber.

The poor dispersibility and reactivity of the microcrystalline zinc oxide in the elastomeric compound inevitably leads to an overdosing thereof with respect to the amount actually required for cross-linking.

Since zinc can pollute land and water used for agricultural use, with accumulation phenomena that can cause serious damage to animal and plant species, and ultimately to man, over the years attempts have been made to reduce the quantity of zinc in the compounds, and thus reduce the amount of zinc dispersed in the environment due to the normal abrasion of the tyres.

Initially, it has been shown to be advantageous to use materials in which the silica surface has been functionalised with amino silanes, such as 3-aminopropyltriethoxysilane (APTES), bound to the silica surface by covalent bonds of the Si-O-Si type, which lead to the coordination of their terminal amino group to Zn²⁺. The application of these new materials in the vulcanisation process of elastomeric compounds has demonstrated higher vulcanisation efficiencies and better cross-linking densities with respect to the conventionally used ZnO activator, as described in WO 2020/110023, in the name of the Applicant, and in S. Mostoni et al., "Design of a Zn Single-Site Curing Activator for a More Sustainable Sulfur Cross-Link Formation in Rubber" Ind. Eng. Chem. Res. 2021, 60, 10180-10192.

Subsequently, in order to try to totally replace the use of zinc, studies were conducted on the use of other metal oxides (such as CaO, MgO, BaO, BeO, and CuO) as activators for the vulcanisation of EPDM and SBR rubber instead of zinc oxide (Lautenschlaeger, f.k; Edwards, k. Model compound vulcanisation-part V. The effect of chemical additives and fillers. Rubber Chem. Technol. 1979; Vol 53; 27-47).

Other studies, carried out to compare the catalytic activity of calcium and magnesium oxide in the vulcanisation reaction, have shown that when calcium oxide is used as an activator, the kinetics are slower and a lower degree of cross-linking is achieved. When instead magnesium oxide is used in place of ZnO, the accelerant reacts with good kinetics in the first steps of the vulcanisation reactions, but also in this case a lower cross-linking density is reached than that obtained with zinc oxide. In this case, zinc oxide remains the best activator, resulting in a high degree of cross-linking (Roy, K.; Alam, M.N.; Mandal, S.K.; Debnath, S.C. Preparation of zinc-oxide-free natural rubber nanocomposites using nanostructured magnesium oxide as cure activator. J. Appl. Polym. Sci. 2015, 132, 1-7); (Guzmán, M.; Vega, B.; Agulló, N.; Giese, U.; Borrós, S. Zinc oxide versus magnesium oxide revisited. Part 1. Rubber Chem. Technol. 2012, 85, 38-55;) (Guzmán, M.; Vega, B.; Agulló, N.; Borrós, S. Zinc Oxide Versus Magnesium Oxide Revisited. Part 2. Rubber Chem. Technol. 2012, 85, 56-67).

Some studies have used iron, in particular as iron oxide, in elastomeric compounds to give the final material some specific properties, such as magnetic, electrical or conductive properties, or to influence the cross-linking reaction.

El-Nashar et al [J Mater Sci (2006) 41, 5359-5364] prepared a composite with good mechanical, magnetic and electrical properties by mixing different concentrations of magnetic Fe nanoparticles as filler with natural rubber matrix to form composites for different applications.

Bellucci et al. [Composites Part B:Engineering, Volume 85 (2016) 196-206] studied the influence of size, shape and concentration of ferrite nanoparticles on the magnetic properties of natural rubber nanocomposites.

Smejda - Krzewicka et al. [Iranian Polymer Journal (2019) 28:313-323] studied the effects of iron (III) oxide (Fe₂O₃) in the cross-linking process of chloroprene butadiene rubber compounds (CR/BR) and observed that the resulting CR/BR/Fe₂O₃ vulcanisates were characterised by good mechanical properties, a higher hardening speed and a high fire resistance.

Dziemidkiewicz et al. [Journal of Thermal Analysis and Calorimetry (2019) 138:4395-4405] studied the activity of metal acetylacetonates, especially iron acetylacetonate, as vulcanising agents for brominated butyl rubber (BIIR) based on the Heck-type reaction.

Tantawy et al. (Polym Int 49,1670-1676 (2000) studied the effect of iron oxide (Fe₃O₄) in combination with zinc oxide and carbon black on the vulcanisation process of butyl rubber (IIR), by measuring the DC conductivity, thermoelectric power, dielectric constant and I-V characteristics.

Patent document CN101775263 discloses an adhesive composition comprising SBR, a grafting monomer and 3-aminopropyl triethoxysilane as adhesive agent.

### SUMMARY OF THE INVENTION

The Applicant has undertaken studies to further improve the effectiveness of activating fillers in the production of compounds for tyres, with the aim of eliminating the zinc incorporated in the compounds, with important benefits for the environment, without deteriorating or even improving their performance compared to comparable conventional compounds.

Surprisingly, the Applicant has found that iron in ionic form Fe³⁺ can be bound to particles of a white filler, for example silica nanoparticles, through a coupling agent comprising reactive groups capable of binding to the surface of the white filler, in particular capable of forming oxygen bridges, and coordinating groups capable of chelating iron in ionic form.

The coupling agent can therefore be schematised by the following formula (I):

GR-ROS-GC (I)

wherein GR represents one or more reactive groups capable of binding to the surface of the white filler through the formation of oxygen bridges (-O-), ROS represents an organo-silane residue, and GC represents one or more coordinating groups.

Moreover, the material produced by the Applicant can therefore be schematised by the following formula (II):

WF-O-ROS-GC-Fe (II)

wherein the reactive groups GR reacted with the surface of the white filler (WF) to form oxygen bridges (-O-) with the organo-silane residue (ROS), and subsequently the coordinating groups GC chelated the iron in ionic form.

The Applicant has surprisingly found that such materials offer various advantages when used in the vulcanisation processes of the compounds used in the production of tyres.

Advantageously, the use of such materials makes iron in ionic form readily available, thus forming the organometallic complexes more rapidly and more efficiently.

The Applicant has observed that the use of such materials allows using lower mixing temperatures because they do not require the use of silanes, to the full advantage of the integrity of the materials and the preparation costs of the elastomeric compound to be subjected to vulcanisation.

Moreover, the Applicant has observed that such materials allow faster vulcanisation times as well as better mechanical properties of the resulting vulcanised materials.

A further advantage observed by the Applicant consists in the fact of eliminating the use of zinc in the tyre vulcanisation process, with evident advantages from the environmental point of view.

A first aspect of the present invention is therefore a compound represented by the following formula (II):

WF-O-ROS-GC-Fe (II)

wherein WF represents the white filler, O represents one or more oxygen bridge bonds, ROS represents an organo-silane residue, GC represents one or more coordinating groups forming a chelate with iron in ionic form, and Fe represents iron in ionic form (Fe³⁺) coordinated with the coordinating groups.

A second aspect of the present invention is represented by a process for the preparation of the compound represented by formula (II) of the first aspect of the present invention, wherein said process comprises at least:
- providing a white filler (WF)
- providing a coupling agent having the following formula (I):

   GR-ROS-GC (I)

   wherein GR represents one or more reactive groups capable of forming oxygen (-O-) bridges with the surface of said white filler, ROS represents a organo-silane residue, and GC represents one or more coordinating groups,
- providing an iron precursor in ionic form (Fe³⁺),
- reacting the white filler (WF) with one or more reactive groups (GR) of said compound of formula (I) so as to form oxygen (-O-) bridges between said white filler and said organo-silane residue (ROS),
- reacting one or more coordinating groups (GC) of said compound of formula (I) with the iron precursor in ionic form (Fe³⁺) so as to form a chelate, and
- separating the resulting compound of formula (II) WF-O-ROS-GC-Fe.

A third aspect of the present invention is represented by a process for the preparation of a vulcanisable elastomeric compound for tyres, where said process comprises at least:
- a mixing step (1) of at least one elastomeric polymer and of at least one additive for elastomeric compounds, with the exception of a vulcanising agent, to give a non-vulcanisable elastomeric compound;
- a mixing step (2) of the non-vulcanisable elastomeric compound and of at least one vulcanising agent, to give a vulcanisable elastomeric compound, and
- a step of unloading of the vulcanisable elastomeric compound,
wherein the compound according to the first aspect of the invention is added in at least one of said mixing steps (1) and (2).

A fourth aspect of the present invention is represented by a vulcanisable elastomeric compound obtained according to the process of the third aspect of the present invention.

A fifth aspect of the present invention is a component of a tyre comprising the vulcanisable compound of the fourth aspect of the invention or the vulcanised compound obtained by vulcanisation thereof.

A sixth aspect of the present invention is a tyre for vehicle wheels comprising a component according to the fifth aspect of the invention.

### DEFINITIONS

For the purposes of the present description and of the following claims, the term "phr" (parts per hundreds of rubber) means the parts by weight of a given component of the elastomeric composition by 100 parts by weight of the diene elastomeric polymer.

Unless otherwise indicated, all the percentages are expressed as percentages by weight.

In the present description, the term "elastomeric polymer" or "rubber" or "elastomer" means a natural or synthetic polymer which, after vulcanisation, at room temperature can be stretched repeatedly to at least twice its original length and which, after removal of the tensile load substantially immediately returns with force to approximately its original length (according to the definitions of the ASTM D1566-11 Standard terminology relating to Rubber).

In the present description, the term "reinforcing filler" refers to a reinforcing material typically used in the sector to improve the mechanical properties of tyre rubbers, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof.

In the present description, the term "white filler" refers to a conventional reinforcing material used in the sector selected from among conventional silica and silicates, such as sepiolite, paligorskite also known as attapulgite, montmorillonite, alloisite and the like, possibly modified by acid treatment and/or derivatised. Typically, white fillers have surface hydroxyl groups.

In the present description, the term "reactive group" indicates a group capable of reacting with the surface hydroxyl groups of the white filler and form an oxygen bridge (-O-) with elimination of water or alcohol, typically a hydroxyl group (-OH ) or an alkoxy group (-OR) where R represents a linear or branched alkyl chain having 1 to 6 carbon atoms.

In the present description, the term "organo-silane residue" means a residue comprising at least one linear or branched alkyl chain having 1 to 6 carbon atoms bound to a silicon atom.

In the present description, the term "coordinating group" indicates a functional group comprising an atom capable of forming a coordination bond with the iron in ionic form Fe³⁺, such as for example nitrogen, oxygen or sulphur.

In the present description, the term "precursor of iron in ionic form (Fe³⁺)" indicates a compound selected from Fe₂O₃, Fe(OH)₃, and the organic or inorganic salts of Fe³⁺.

In the present description, the term "elastomeric compound" refers to the product obtained by mixing and, optionally, heating at least one elastomeric polymer with at least one of the additives commonly used in the preparation of tyre compounds.

In the present description, the term "non-vulcanisable elastomeric compound" means the product obtained by mixing at least one elastomeric polymer with at least one of the additives commonly used in the preparation of tyre compounds, with the exception of vulcanising agents. A non-vulcanisable elastomeric compound can also be referred to as a phase (1) elastomeric compound.

In the present description, the term "vulcanisable elastomeric compound" means an elastomeric compound ready for vulcanisation, in which all the additives including those of vulcanisation have been incorporated. A vulcanisable elastomeric compound can also be referred to as a phase (2) elastomeric compound.

In the present description, the term "vulcanised elastomeric compound" means the material obtained by vulcanisation of a vulcanisable elastomeric compound.

In the present description, the term "mixing step (1)" indicates the step of the production process of the elastomeric compound in which one or more additives can be incorporated by mixing and possibly heating, except those of vulcanisation which are fed in step (2).

In the present description, the term "mixing step (2)" indicates the subsequent step of the production process of the elastomeric compound in which the vulcanisers and, preferably, the vulcanisation accelerants and/or retardants are introduced and mixed in the material, at a controlled temperature, generally at a mixing temperature lower than 160°C.

The mixing step (1) is also referred to as the "non-productive step" since the components of the compound are fed to the mixing device, except those of cross-linking (for example, sulphur and accelerants).

The mixing step (2) is instead referred to as the productive step. In this step, the elastomeric compound obtained from step (1) and the vulcanisation additives capable of favouring and/or controlling cross-linking are fed to the mixing device, so as to provide the vulcanisable elastomeric compound.

In the present description, the term "green" is generally used to indicate a material, a compound, a composition, a component or a tyre not yet vulcanised.

### DETAILED DESCRIPTION OF THE INVENTION

The process for the preparation of the compound of formula (II) according to the invention will be illustrated in detail below.

This process is characterised by one or more of the following preferred aspects taken alone or in combination with one another, in particular by the use of a coupling agent having the following formula (I):

GR-ROS-GC (I)

wherein GR represents one or more reactive groups, ROS represents an organo-silane residue, and GC represents one or more coordinating groups.

The process of the present invention comprises at least:
- providing a white filler (WF)
- providing a coupling agent having the following formula (I):

   GR-ROS-GC (I)

   wherein GR represents one or more reactive groups capable of forming oxygen (-O-) bridges with the surface of said white filler, ROS represents a organo-silane residue, and GC represents one or more coordinating groups,
- providing an iron precursor in ionic form (Fe³⁺),
- reacting the white filler (WF) with one or more reactive groups (GR) of said compound of formula (I) so as to form oxygen (-O-) bridges between said white filler and said organo-silane residue (ROS),
- reacting one or more coordinating groups (GC) of said compound of formula (I) with the iron precursor in ionic form (Fe³⁺) so as to form a chelate, and
- separating the resulting compound of formula (II) WF-O-ROS-GC-Fe.

The white filler may be any conventional white reinforcing filler that has hydroxyl groups on the surface.

The white filler is preferably selected from conventional silica and silicates, in the form of fibres, flakes or granules, such as bentonite, nontronite, beidellite, volkonskoite, hectorite, saponite, sauconite, vermiculite, sericite, sepiolite, paligorskite also known as attapulgite, montmorillonite, alloisite and the like, possibly modified by acid treatment and/or derivatised, and mixtures thereof, more preferably it is silica.

Silica may vary in shape, specific surface area and size.

Examples of silica are a pyrogenic silica, a precipitated amorphous silica, a wet silica (hydrated silicic acid), or mixtures thereof.

Examples of suitable commercial silicas are the precipitated silica Rhodia Zeosil MP1165 (BET specific surface area 160 m²/g), Ultrasil VN3 GR (BET specific surface area 180 m²/g) and Zeosil 1115 MP (BET specific surface area 95-120 m²/g).

Preferably, the silica has a specific surface area (BET) of at least 120 m²/g, more preferably of at least 140 m²/g.

Preferably, the silica has a specific surface area (BET) smaller than 220 m²/g, more preferably smaller than or equal to 180 m²/g.

Useful examples of compounds represented by the formula (I) are alkoxy silanes functionalised with one or more functional groups comprising a heteroatom, where the alkoxy groups represent the reactive groups GR capable of binding with the white filler, and the functional groups comprising a heteroatom represent the coordinating groups GC capable of forming a coordination bond with the iron in ionic form (Fe³⁺).

Preferred examples of reactive groups GR are alkoxy groups having 1 to 4 carbon atoms, namely the methoxy, ethoxy, propoxy, isopropoxy, butoxy, isobutoxy, and tert-butoxy groups.

Preferred examples of GC coordinating groups represented by functional groups comprising a heteroatom are alkyl chains, either linear or branched, comprising one or more heteroatoms within or at the end of the alkyl chain, such as for example the functional groups represented by the formula -CₙH₂ₙ-XCₘH₂ₘ-Y or - CₘH₂ₘ-Y, where n and m, equal or different from each other, are an integer from 1 to 6 inclusive; X is a group selected from mercapto and amino, and Y is a group selected from mercapto, amino, dithiocarbamate and carboxyl.

Useful examples of compounds represented by the formula (I) are represented by the following general formulas (Ia) and (Ib):

(R)₃Si-CₙH₂ₙ-X-CₘH₂ₘ-Y (Ia)

(R)₃Si-CₘH₂ₘ-Y (Ib)

wherein R groups, equal or different from each other, are selected from alkyl or alkoxy groups having from 1 to 4 carbon atoms, provided at least one of the R groups is an alkoxy group; n and m, equal or different from each other, are an integer from 1 to 6 inclusive; X is a group selected from mercapto and amino, and Y is a group selected from mercapto, amino, dithiocarbamate, and carboxylic.

Compounds usable in the present invention are (3-aminopropyl)triethoxysilane (APTES), N-(2-aminoethyl)-3-aminopropyl-trimethoxysilane (also known as N-[3-(trimethoxysilyl)propyl]ethylenediamine (EDTMS)), N-(2-aminoethyl)-3-aminopropyl-triethoxysilane, N-(2-aminoethyl)-3-aminopropyl-methyl-dimethoxy silane, 3-aminopropylmethyl-diethoxysilane, 3-ureidopropyl-trimethoxy silane, 3-ureidopropyl-triethoxysilane, N-cyclohexyl(aminomethyl) methythioxy silane, N-cyclohexyl(aminomethyl)triethoxysilane, N-cyclohexyl-3-aminopropyl-trimethoxy silane, 3-(2-aminomethylamino)propyl-triethoxysilane, N-(n-butyl)-3-aminopropyl trimethoxy-silane, N-(2-aminoethyl)-3-aminopropylmethyldiethoxy silane, N-(2-aminoethyl)-3-aminoisobutyl-methyldimethoxysilane, 3-aminopropylmethyl dimethoxysilane, 3-(2-(2-aminoethylamino)ethylamino)propyl-trimethoxy silane, N-(n-butyl)-3-aminopropyl-triethoxysilane, N,N-diethylaminopropyl-trimethoxysilane, N,N-dimethylaminopropyl-trimethoxysilane, butylaminomethyl-triethoxysilane, N-cyclohexyl(aminomethyl)trimethoxy-silane, 2-aminoethyl aminomethyl-triethoxysilane, diethylaminomethyl-triethoxysilane, (3-mercaptopropyl) triethoxysilane and (3-mercaptopropyl)trimethoxysilane.

Preferred compounds are (3-mercaptopropil)trimethoxysilane, (3-aminopropyl)triethoxysilane (APTES), (3-aminopropyl)trimethoxysilane, N-(2-aminoethyl)-3-aminopropyltrimethoxysilane (also known as N-[3-(trimethoxysilyl)propyl]ethylenediamine (EDTMS)), and N-(2-aminoethyl)-3-aminopropyltriethoxysilane.

The precursor of iron in ionic form (Fe³⁺) can be Fe₂O₃, Fe(OH)₃, and the organic or inorganic salts of Fe³⁺ such as for example ferric nitrate, ferric sulphate, ferric carbonate, ferric chloride, bromide ferric, ferric iodide, ferric fluoride, ferric phosphate, ferric acetate, ferric oxalate, ferric citrate, ferric gluconate, ferric fumarate, ferric lactate, etc., in anhydrous or hydrated form.

The reaction step between the white filler and the coupling agent of formula (I) is carried out hot in the solvent phase, by first dispersing the white filler in a suitable solvent and then adding the coupling agent, allowing it to react until the reaction is completed.

The solvent used for the reactions is preferably selected from the group of nonpolar solvents, such as hexane, cyclohexane, benzene and toluene.

Optionally, the white filler is first activated by dispersion in a basic aqueous solution, such as for example a sodium hydroxide solution. The activation of the white filler is carried out at room temperature, ranging from 20° to 30°C, for a period of at least 1 hour, more preferably at least 3 hours, and even more preferably at least 6 hours. The activation period is preferably less than 48 hours, more preferably less than 36 hours. Advantageously, the activation period is in the range between 12 and 24 hours. The white filler thus activated is separated by conventional separation techniques (filtration, centrifugation, and so on) and then subjected to lyophilisation.

The reaction between the white filler and the coupling agent is preferably carried out at a temperature higher than 40°C, more preferably higher than 60°C, and even more preferably higher than 80°C. The reaction temperature is preferably lower than 200°C, more preferably lower than 180°C, and even more preferably lower than 160°C.

The reaction between the white filler and the coupling agent is preferably carried out at the reflux temperature of the reaction mixture for a period of at least 1 hour, more preferably at least 3 hours, and even more preferably at least 6 hours. The reaction period is preferably less than 48 hours, more preferably less than 36 hours. Advantageously, the reaction period is in the range between 12 and 24 hours.

The reaction product represented by the functionalised white filler is separated by conventional separation techniques (filtration, centrifugation, and so on) and then dried at temperatures between 60°C and 100°C.

The functionalised white filler, which can be represented with the formula WF-O-ROS-GC, is then reacted with the iron precursor in ionic form (Fe³⁺) so as to form the chelate represented by the formula (II).

The reaction is carried out hot in the solvent phase, by first dispersing the functionalised white filler (WF-O-ROS-GC) in a suitable solvent and then adding the iron precursor in ionic form (Fe³⁺), such as (Fe₂(SO₄)₃*xH₂O, allowing it to react until the reaction is completed.

The solvent used for the reaction is preferably selected from the group of polar protic solvents, such as ethanol, methanol and isopropanol.

The reaction is preferably carried out at a temperature higher than 40°C, more preferably higher than 60°C, and even more preferably higher than 80°C. The reaction temperature is preferably lower than 200°C, more preferably lower than 180°C, and even more preferably lower than 160°C.

The reaction is preferably carried out at the reflux temperature of the reaction mixture for a period of at least 10 minutes, more preferably at least 30 minutes, and even more preferably at least 1 hour. The reaction period is preferably less than 12 hours, more preferably less than 6 hours. Advantageously, the reaction period is in the range between 2 and 4 hours.

The reaction product represented by the formula (II) according to the present invention is separated by conventional separation techniques (filtration, centrifugation, and so on) and then dried at temperatures between 60°C and 100°C.

The process for preparing a vulcanisable elastomeric compound for tyres according to the invention will be illustrated in detail below.

This process is characterised by one or more of the following preferred aspects taken alone or in combination with one another, in particular by the use of a compound represented by the following formula (II):

WF-O-ROS-GC-Fe (II)

wherein WF represents the white filler, O represents one or more oxygen bridge bonds, ROS represents an organo-silane residue, GC represents one or more coordinating groups forming a chelate with iron in ionic form, and Fe represents iron in ionic form (Fe³⁺) coordinated with the coordinating groups.

The present process can be a continuous process but, preferably, it is a discontinuous process (batch).

The present process, when discontinuous, can be carried out in one or more mixers, preferably in a single mixer.

The process according to the invention comprises a mixing step (step 1) of at least one diene elastomeric polymer and at least one additive for elastomeric compounds, which is not a vulcanising agent.

The at least one additive for elastomeric compounds which is mixed together with the at least one diene elastomeric polymer in the mixing step (1) can be for example the compound of formula (II) of the present invention, a reinforcing filler, an antioxidant, a wax, a plasticiser and the like.

Generally in the mixing step (1) no vulcanising agent is added and, preferably, not even vulcanisation accelerant agents or retardant agents.

In the present process, in the mixing step (1) the compound of formula (II) of the present invention can be fed, in whole or in part.

Preferably, the compound of formula (II) of the present invention is all fed in step (1).

In step (1), mixing is carried out at mixing temperatures generally between 70° and 160°C and for times typically between 2 and 20 minutes.

Before proceeding with step (2), it may be advantageous to carry out a step of discharge and/or rest of the non-vulcanisable elastomeric compound in order to allow the completion of any reactions.

Preferably, the compound of step (1) is discharged before proceeding with step (2).

In the subsequent step (2), at least one vulcanising agent is incorporated. Possibly, in step (2) at least one vulcanisation accelerant agent, at least one vulcanisation retardant agent, and if not already completely fed into the mixing step (1), the compound of formula (II) of the present invention can be added.

In step (2) of the present process, the mixing temperature is generally kept below 160°C, preferably at 140°C, more preferably at 120°C, so as to avoid any undesired pre-cross-linking phenomenon.

Generally in step (2) the mixing can be carried out at mixing temperatures between 70° and 155°C and for times between 2 and 10 minutes.

At the end of step (2), the present process involves a step of unloading the vulcanisable elastomeric compound which will be destined to the subsequent typical processing steps for the production of tyres and components thereof.

In one or more of the steps of the present process, other additives commonly used in the production of tyre compounds can be added, selected on the basis of the specific application for which the composition is intended. For example, the following may be added: anti-ageing agents, plasticisers, adhesives, anti-ozone agents, modifying resins, or mixtures thereof.

In the present process, the at least one diene elastomeric polymer can be selected from those commonly used in sulphur-vulcanisable elastomeric compositions, which are particularly suitable for producing tyres, i.e. from among elastomeric polymers or copolymers with an unsaturated chain having a glass transition temperature (Tg) generally lower than 20°C, preferably in the range from 0°C to - 110°C.

Preferably, the diene elastomeric polymer has a weight average molecular weight (Mw) higher than 80000 g/mol.

These polymers or copolymers may be of natural origin or may be obtained by solution polymerization, emulsion polymerization or gas-phase polymerization of one or more conjugated diolefins, optionally mixed with at least one comonomer selected from monovinylarenes and/or polar comonomers in an amount not exceeding 60% by weight.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene and mixtures thereof.

1,3-butadiene and isoprene are particularly preferred.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, and mixtures thereof. Styrene is particularly preferred.

Polar comonomers that may optionally be used, may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile and mixtures thereof.

Preferably, the diene elastomeric polymer which can be used in the present invention can be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof.

The above vulcanisable elastomeric compound may possibly comprise an elastomeric polymer of one or more monoolefins with an olefinic comonomer or derivatives thereof. The monoolefins can be selected from: ethylene and α-olefins generally containing from 3 to 12 carbon atoms, such as for example propylene, 1-butene, 1-pentene, 1-hexene, 1-octene and mixtures thereof. The following are preferred: copolymers selected from ethylene and an α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene and mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; or mixtures thereof.

A diene elastomeric polymer or an elastomeric polymer functionalised by reaction with suitable terminating agents or coupling agents may also be used. In particular, the diene elastomeric polymers obtained by anionic polymerization in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

In the present process for the preparation of the vulcanisable elastomeric compound, the at least one elastomeric polymer may comprise one or more diene elastomeric polymers as defined above in mixture which can be advantageously subjected to the chewing step (step 1-0) to be better blended.

In the present process, the quantity used of the at least one elastomeric polymer or the mixture of two or more elastomeric polymers as defined above amounts to a total of 100 phr.

In the present process, the at least one vulcanising agent is preferably selected from sulphur, or alternatively, sulphur-containing molecules (sulphur donors), such as for example caprolactam disulphide (CLD), bis (trialcoxysilyl)propyl]polysulphides, dithiophosphates, phosphorylpolysulphide (SDT) and mixtures thereof.

Preferably, the vulcanising agent is sulphur preferably selected from soluble sulphur (crystalline sulphur), insoluble sulphur (polymeric sulphur), (iii) oil-dispersed sulphur and mixtures thereof.

Commercial examples of suitable vulcanising agents are the 65% sulphur known under the trade name of Rhenogran of Lanxess, the 67% sulphur known under the trade name of Crystex OT33 of Eastman, the 95% sulphur known under the trade name of Solvay SchwefelKC, the rhombic crystalline sulphur known under the trade name of Sulphur (1% oil and 0.3% silica) of Zolfindustria.

The vulcanising agent may be present in the vulcanisable elastomeric compound in an overall amount generally of from 0.1 to 15 phr, preferably from 0.5 to 10 phr, even more preferably from 1 to 7 phr.

The present elastomeric compound may comprise one or more vulcanising agents as defined above in a mixture.

In the present process, the vulcanising agent is preferably used together with adjuvants such as vulcanisation accelerants and/or retardants known to those skilled in the art.

In the present process, the vulcanisation accelerant agent is preferably selected from dithiocarbamates, guanidines, thioureas, thiazoles, sulphenamides, sulphenimides, thiurams, amines, xanthates and mixtures thereof.

Preferably, the accelerant agent is selected from N-cyclohexyl-2-benzothiazol-sulphenamide (CBS), N-tert-butyl-2-benzothiazol-sulphenamide (TBBS) and mixtures thereof.

A commercial example of a suitable accelerant agent is N-cyclohexyl-2-benzothiazol-sulphenamide Vulkacit^{®} (CBS or CZ) marketed by Lanxess.

The accelerant agent may be present in the vulcanisable elastomeric compound in an overall amount generally ranging between 0.05 phr and 10 phr, preferably between 0.1 phr and 5 phr.

The present elastomeric compound may comprise one or more accelerant agents as defined above in a mixture.

In the present process, the vulcanisation retardant agent may be selected for example from urea, phthalic anhydride, N-nitrosodiphenylamine N-cyclohexylthiophthalimide (CTP or PVI), and mixtures thereof.

A commercial example of a suitable retardant agent is N-cyclohexylthiophthalimide VULKALENT G of Lanxess.

The retardant agent may be present in the vulcanisable elastomeric compound in an amount generally ranging between 0.05 phr and 2 phr.

The present elastomeric compound may comprise one or more retardant agents as defined above in a mixture.

Preferably in the present process, preferably in the mixing step (1), one or more optional additives may be fed such as for example at least one reinforcing filler, at least one antioxidant agent, at least one wax and at least one plasticiser.

In the present process, the reinforcing filler is selected from carbon black, conventional silica, such as sand silica precipitated with strong acids, preferably amorphous, hydrotalcite, diatomaceous earth, calcium carbonate, titanium dioxide, talc, alumina, aluminosilicates, kaolin, silicate fibres and mixtures thereof.

Preferably, the further reinforcing filler is selected from carbon black, conventional silica, silicate fibres and mixtures thereof, preferably it is silica.

Carbon black can be selected from those of standard grade for tyres, or having a surface area not smaller than 20 m²/g, more preferably greater than 50 m²/g (measured in accordance with the ASTM D6556-16 standard).

A commercial example of a suitable reinforcing filler is the Zeosil 1165MP silica from Solvay Rhodia.

Commercial examples of carbon black are N375 or N234 marketed by Birla Group (India) or Cabot Corporation.

The reinforcing filler may be present in the vulcanisable elastomeric compound in an amount generally ranging between 0 phr and 120 phr, preferably between 3 phr and 80 phr.

In one embodiment, the reinforcing filler may be absent, in which case the reinforcing function is performed by the compound of formula (II) according to the present invention.

For some applications, the elastomeric compound prepared according to the present process may comprise at least 1 phr, more preferably at least 2 phr, more preferably at least 3 or 4 phr of carbon black, which advantageously protects the elastomer from ageing caused by the action of ultraviolet radiation.

The present elastomeric compound may comprise one or more reinforcing fillers as defined above in a mixture.

In the present process, as antioxidant, phenylenediamine, diphenylamine, dihydroquinoline, phenol, benzimidazole, hydroquinone and derivatives thereof, possibly in a mixture, may be used.

In the present process, the antioxidant agent is preferably selected from N-isopropyl-N'-phenyl-p-phenylenediamine (IPPD), N-(1,3-dimethyl-butyl)-N'-phenyl-p-phenylenediamine (6PPD), N,N'-bis-(1,4-dimethyl-pentyl)-p-phenylenediamine (77PD), N,N'-bis-(1-ethyl-3-methyl-pentyl)-p-phenylenediamine (DOPD), N,N'-bis-(1,4-dimethyl-pentyl)-p-phenylenediamine, N,N'-diphenyl-p-phenylenediamine (DPPD), N,N'-ditolyl-p-phenylenediamine (DTPD), N,N'-di-beta-naphthyl-p-phenylenediamine (DNPD), N,N'-bis(1-methylheptyl)-p-phenylenediamine, N,N'-Di-sec-butyl-p-phenylenediamine (44PD), N-phenyl-N-cyclohexyl-p-phenylene diamine, N-phenyl-N'-1-methylheptyl-p-phenylenediamine and the like and mixtures thereof, preferably it is N-(1,3-dimethyl-butyl)-N'-phenyl-p-phenylenediamine (6PPD).

A commercial example of a suitable antioxidant agent is 6PPD of Solutia/Eastman. The antioxidant agent may be present in the vulcanisable elastomeric compound in an overall amount generally ranging between 0 phr and 20 phr, preferably between 0.5 phr and 10 phr.

In the present process, the wax may be for example a petroleum wax or a mixture of paraffins.

Commercial examples of suitable waxes are the Repsol N-paraffin mixture and the Antilux^{®} 654 microcrystalline wax from Rhein Chemie.

The wax may be present in the vulcanisable elastomeric compound in an overall amount generally ranging between 0 phr and 20 phr, preferably between 0.5 phr and 5 phr.

In the present process, in order to further improve the processability, the elastomeric compound may be admixed with at least one plasticiser agent generally selected from mineral oils, vegetable oils, synthetic oils, polymers with a low molecular weight and mixtures thereof, such as, for example, aromatic oil, naphthenic oil, phthalates, soybean oil and mixtures thereof. The amount of plasticiser generally ranges from 0 phr and 70 phr, preferably from 5 phr to 30 phr. Preferably, the plasticising agent is added in the chewing step of the polymer, if present.

A fourth aspect of the present invention is represented by a vulcanisable elastomeric compound obtained according to the process of the third aspect of the present invention.

In the elastomeric compound according to the invention, the iron is present in ionic form as Fe³⁺, bound by coordination bonds to form the compound represented by the formula (II) of the present invention, but not in the form of metallic iron (Fe°).

The amount of iron in the compound can be determined for example by ICP-AES (Inductively Coupled Plasma-Atomic Emission Spectroscopy) spectrometry, as described in the experimental part.

The present vulcanisable elastomeric compound can be incorporated in one or more components of the tyre.

By virtue of the present process, it is possible to eliminate the zinc incorporated in the compounds, with important benefits for the environment, without deteriorating or even improving their performance compared to comparable conventional compounds.

According to a fifth aspect of the invention, the present elastomeric compound is applied to tyre components such as tread, underlayer, anti-abrasive elongated element, sidewall, sidewall insert, mini-sidewall, under-liner, rubber layers, bead filler and sheet, more preferably in the tread, in the under-layer and in the sidewall, and underliner.

Preferably, the tyre component according to the invention consists of the vulcanisable compound according to the invention (green component) or of the vulcanised compound obtained by vulcanisation thereof (vulcanised component).

A sixth aspect of the present invention is a tyre for vehicle wheels comprising at least one of the components indicated above.

Preferably, the tyre for vehicle wheels of the invention comprises at least one tyre component which consists of a vulcanisable elastomeric compound (green component) according to the second aspect of the invention or of a vulcanised elastomeric compound obtained by vulcanisation thereof.

In one embodiment, a tyre for vehicles according to the present invention comprises at least
- a carcass structure comprising at least a carcass ply having opposite lateral edges associated to respective bead structure;
- possibly a pair of sidewalls applied to the lateral surfaces of the carcass structure, respectively, in an axially outer position;
- possibly a belt structure applied in radially outer position with respect to the carcass structure;
- a tread band applied in a radially outer position to said carcass structure or, if present, a belt structure,
- possibly a layer of elastomeric material, referred to as under-layer, applied in a radially inner position with respect to said tread band,
wherein at least one component selected from said pair of sidewalls, said under-layer and said tread band comprises, or preferably consists of, the elastomeric compound according to the invention.

An embodiment according to the present invention relates to a tyre for high performance vehicles (HP, SUV and UHP), wherein at least one component, preferably selected from under-layer, sidewall and tread band, comprises, or preferably consists of, the elastomeric compound according to the invention.

An embodiment according to the present invention relates to a tyre for heavy vehicles in which at least one component, preferably selected from under-layer, sidewall and tread band, comprises, or preferably consists of, the elastomeric compound according to the invention.

The tyre according to the invention may be a tyre for two, three or four-wheeled vehicles.

In one embodiment, the tyre according to the invention is a tyre for bicycle wheels. A tyre for bicycle wheels typically comprises a carcass structure turned around a pair of bead cores at the beads and a tread band arranged in a radially outer position with respect to the carcass structure.

The carcass structure is intended to withstand the inflation pressure and to support the weight of the bicycle and the cyclist. It comprises one or more carcass plies, each comprising a plurality of suitably oriented reinforcing cords. **In** the case of several carcass plies, they are inclined with respect to each other to form a crossed structure.

The bead cores have the task of ensuring that the tyre is anchored to the wheel rim.

In the radially inner position of the carcass structure, an air chamber may be provided in which pressurised air is introduced.

The tyre according to the invention may be for summer or winter use or for all seasons.

The tyre according to the present invention can be manufactured according to a process which comprises:
- building components of a green tyre on at least one forming drum;
- shaping, moulding and vulcanising the tyre;
wherein building at least one of the components of a green tyre comprises:
- manufacturing at least one green component comprising, or preferably consisting of, the vulcanisable elastomeric compound of the invention.

### DESCRIPTION OF THE DRAWINGS

Figure 1 shows a radial half-section of a tyre for vehicle wheels according to the invention.
Figure 2 shows a Cartesian graph relating to the vulcanisation curves of the elastomeric compounds RIF1, CON1 and INV1 described in Example 2.
Figure 3 illustrates the nominal molar ratio (n_{Fe(precursor)}/n_{APTES}) used for the syntheses of SiO₂-APTESₓ-Fe_{Y} materials versus the actual molar ratio (n_{Fe}/n_{APTES}) determined in SiO₂-APTESₓ-Fe_{Y} materials. The dashed black line represents the ideal situation that would exist if the two ratios coincided.

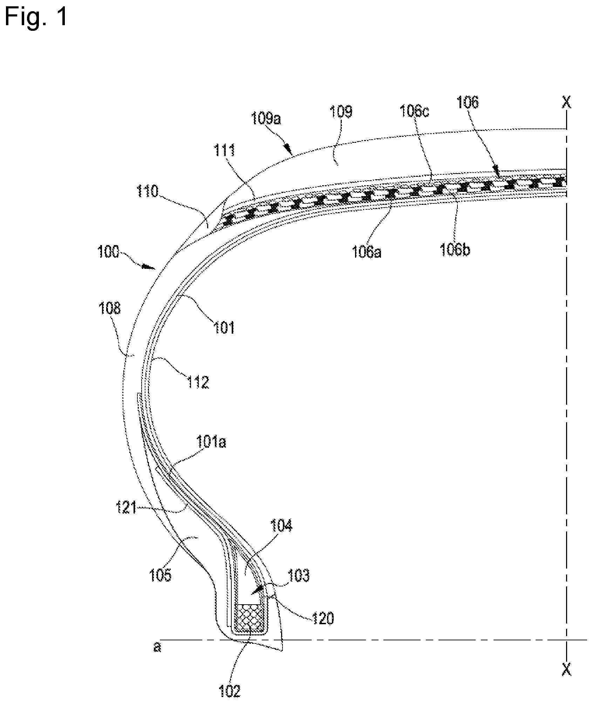

In particular, Figure 1 shows a radial half-section of a tyre for vehicle wheels, comprising a vulcanised elastomeric compound prepared by vulcanisation of an elastomeric compound prepared according to the process of the invention.

In Figure 1, "a" indicates an axial direction and "X" indicates a radial direction, in particular X-X indicates the outline of the equatorial plane. For simplicity, Figure 1 shows only a portion of the tyre, the remaining portion not shown being identical and arranged symmetrically with respect to the equatorial plane "X-X".

Tyre 100 for four-wheeled vehicles comprises at least one carcass structure, comprising at least one carcass layer 101 having respectively opposite end flaps engaged with respective annular anchoring structures 102, referred to as bead cores, possibly associated to a bead filler 104.

The carcass layer 101 is optionally made with an elastomeric compound.

The tyre area comprising the bead core 102 and the filler 104 forms a bead structure 103 intended for anchoring the tyre onto a corresponding mounting rim, not shown.

The carcass structure is usually of radial type, i.e. the reinforcing elements of the at least one carcass layer 101 lie on planes comprising the rotational axis of the tyre and substantially perpendicular to the equatorial plane of the tyre. Said reinforcement elements generally consist of textile cords, such as rayon, nylon, polyester (for example polyethylene naphthalate, PEN). Each bead structure is associated to the carcass structure by folding back of the opposite lateral edges of the at least one carcass layer 101 around the annular anchoring structure 102 so as to form the so-called carcass flaps 101a as shown in Figure 1.

In one embodiment, the coupling between the carcass structure and the bead structure can be provided by a second carcass layer, not shown in Figure 1, applied in an axially outer position with respect to the first carcass layer.

An anti-abrasive strip 105 optionally made with an elastomeric compound is arranged in an outer position of each bead structure 103.

The carcass structure is associated to a belt structure 106 comprising one or more belt layers 106a, 106b placed in radial superposition with respect to one another and with respect to the carcass layer, having typically textile and/or metallic reinforcement cords incorporated within a layer of vulcanised elastomeric compound.

Such reinforcement cords may have crossed orientation with respect to a direction of circumferential development of tyre 100. By "circumferential" direction it is meant a direction generally facing in the direction of rotation of the tyre.

At least one zero-degree reinforcement layer 106c, commonly known as a "0° belt", may be applied in a radially outermost position to the belt layers 106a, 106b, which generally incorporates a plurality of elongated reinforcement elements, typically metallic or textile cords, oriented in a substantially circumferential direction, thus forming an angle of a few degrees (such as an angle of between about 0° and 6°) with respect to a direction parallel to the equatorial plane of the tyre, and coated with vulcanised elastomeric compound.

A tread band 109 of vulcanised elastomeric compound is applied in a position radially outer to the belt structure 106.

Moreover, respective sidewalls 108 of vulcanised elastomeric compound are applied in an axially outer position on the lateral surfaces of the carcass structure, each extending from one of the lateral edges of tread 109 at the respective bead structure 103.

In a radially outer position, the tread band 109 has a rolling surface 109a intended to come in contact with the ground. Circumferential grooves, which are connected by transverse notches (not shown in Figure 1) so as to define a plurality of blocks of various shapes and sizes distributed over the rolling surface 109a, are generally made on this surface 109a, which for simplicity is represented smooth in Figure 1.

An under-layer 111 of vulcanised elastomeric compound can be arranged between the belt structure 106 and the tread band 109.

A strip consisting of elastomeric compound 110, commonly known as "mini-sidewall", of vulcanised elastomeric compound can optionally be provided in the connecting zone between sidewalls 108 and the tread band 109, this mini-sidewall generally being obtained by co-extrusion with the tread band 109 and allowing an improvement of the mechanical interaction between the tread band 109 and sidewalls 108. Preferably, the end portion of sidewall 108 directly covers the lateral edge of the tread band 109.

In the case of tubeless tyres, a rubber layer 112, generally known as "liner", which provides the necessary impermeability to the inflation air of the tyre, can also be provided in a radially inner position with respect to the carcass layer 101.

The rigidity of the tyre sidewall 108 can be improved by providing the bead structure 103 with a reinforcing layer 120 generally known as "flipper" or additional strip-like insert.

Flipper 120 is a reinforcing layer which is wound around the respective bead core 102 and the bead filler 104 so as to at least partially surround them, said reinforcing layer being arranged between the at least one carcass layer 101 and the bead structure 103. Usually, the flipper is in contact with said at least one carcass layer 101 and said bead structure 103.

Flipper 120 typically comprises a plurality of textile cords incorporated within a layer of vulcanised elastomeric compound.

The bead structure 103 of the tyre may comprise a further protective layer which is generally known by the term of "chafer" 121 or protective strip and which has the function of increasing the rigidity and integrity of the bead structure 103.

Chafer 121 usually comprises a plurality of cords incorporated within a rubber layer of vulcanised elastomeric compound. Such cords are generally made of textile materials (such as aramide or rayon) or metal materials (such as steel cords).

A layer or sheet of elastomeric compound can be arranged between the belt structure and the carcass structure. The layer can have a uniform thickness.

Alternatively, the layer may have a variable thickness in the axial direction. For example, the layer may have a greater thickness close to its axially external edges with respect to the central (crown) zone.

Advantageously, the layer or sheet may extend on a surface substantially corresponding to the extension surface of said belt structure.

In a preferred embodiment, a layer or sheet of elastomeric compound as described above can be placed between said belt structure and said tread band, said additional layer or sheet extending preferably on a surface substantially corresponding to the extension surface of said belt structure.

The elastomeric compound according to the present invention can be advantageously incorporated in one or more of the components of the tyre selected from the belt structure, carcass structure, tread band, under-layer, sidewall, mini-sidewall, sidewall insert, bead, flipper, chafer, sheet and anti-abrasive strip, preferably incorporated at least in the sidewalls and/or in the under-layer.

According to an embodiment not shown, the tyre may be a tyre for motorcycle wheels which is typically a tyre that has a straight section featuring a high tread camber.

According to an embodiment not shown, the tyre may be a tyre for bicycle wheels.

According to an embodiment not shown, the tyre may be a tyre for heavy transport vehicle wheels, such as trucks, buses, trailers, vans, and in general for vehicles in which the tyre is subjected to a high load. Preferably, such a tyre is adapted to be mounted on wheel rims having a diameter equal to or greater than 17.5 inches for directional or trailer wheels.

The description of some preparative examples according to the invention and comparative examples, given only for illustrative and non-limiting of the scope if the invention, is set out below.

### EXPERIMENTAL PART

### ANALYSIS METHODS

### White filler functionalisation

The functionalisation of the white filler was verified with ATR-FTIR, TGA, CHNS, and BET analysis.

The ATR-FTIR analysis was performed with a Perkin Elmer Spectrum 100 instrument (spectra with a resolution of 4 cm⁻¹, region from 650 to 400 cm⁻¹, 32 scans).

Thermogravimetric analysis (TGA) was performed with a TGA/DCS1 STARe SYSTEM (Mettler Toledo) instrument with constant air flow (50 mL min⁻¹). The method used involves applying a heating ramp of 10°C min⁻¹, starting from an initial temperature of 30°C, up to a final temperature of 1000°C. Two 15-minute isotherms were also added at 150°C and 1000°C. Measurements were carried out in alumina crucibles of 75 µL by volume.

The CHNS analysis was performed with an Elementar VarioMICRO analyser in CHNS configuration. The uncertainty of the measure is declared at 0.1%. The measurements were normalised to a sulphanilamide standard. The combustion column is at a temperature of 1150°C, while the reduction column is at 850°C.

The BET analysis was performed with the Micromeritics Tristar II porosity and surface area analysis equipment.

### Determination of the iron content

The iron content can be measured by ICP-AES spectrometry (Inductively Coupled Plasma-Atomic Emission Spectroscopy) with ICP simultaneous plasma spectrometer (TJA IRIS II model; excitation source: radiofrequency generator with 27.12 MHz frequency and variable output power up to 1750 W).

MDR rheometric analysis (according to ISO 6502): a rheometer Alpha Technologies type MDR2000 was used. The tests were carried out at 170°C for 10 minutes at an oscillation frequency of 1.66 Hz (100 oscillations per minute) and an oscillation amplitude of ± 0.5°, measuring the time necessary to achieve an increase of two rheometric units (TS2), the maximum torque value (MH) and the time necessary to achieve 30% (T30) and 100% (T100), respectively, of the maximum torque value (MH).

### Properties of vulcanised materials

The elastomeric materials prepared in the previous examples were vulcanised to give specimens on which analytical characterisations and the assessment of dynamic mechanical properties were conducted.

Unless otherwise indicated, vulcanisation was carried out in a mould, in hydraulic press at 170°C and at a pressure of 200 bar for about 10 minutes.

Static moduli: static mechanical properties were measured at 23°C according to the ISO 37:2005 standard. In particular, the tensile stresses at various elongation levels (10%, 50%, 100% and 300%, named in the order CA0.1, CA0.5, CA1 and CA3) were measured on samples of vulcanised elastomeric compositions.

Dynamic moduli: dynamic mechanical properties were measured using an Instron dynamic device in compression and tension operation with the following method. A sample of vulcanised elastomeric cylindrical compositions (length = 25 mm; diameter = 18 mm), preload in compression up to 25% of longitudinal deformation with respect to the initial length and maintained at the predetermined temperature (10°C, 23°C or 100°C) during the test was subjected to a dynamic sinusoidal stress with amplitude ± 3.5% with respect to the length of the preload, at a frequency of 1Hz, 10 Hz and 100Hz.

The dynamic mechanical properties are expressed in terms of dynamic elastic modulus (E'), viscous dynamic modulus (E") and Tan delta (loss factor). The Tan delta value was calculated as the ratio between the viscous dynamic module (E") and the dynamic elastic modulus (E').

G (shear) dynamic moduli: they were measured using a Monsanto R.P.A. rheometer 2000 according to the following method: cylindrical test specimens with weights in the range of 4.5 to 5.5 g were obtained by punching the vulcanisable elastomeric composition of the samples and vulcanisation thereof in the instrument "RPA" (at 170°C for 10 minutes). The vulcanised samples were subjected to dynamic measurement of the elastic shear modulus (G') at 70°C, 10 Hz frequency, 0.1% and 10% strain. The dynamic elastic properties were expressed in terms of shear elastic dynamic modulus (G'), shear viscous dynamic modulus (G") and Tan delta (loss factor) at a strain of 3% and 9%. The Tan delta value was calculated as the ratio between the shear viscous dynamic module (G") and the shear elastic dynamic modulus (E').

### EXAMPLE 1 - Preparation of functionalised silica

### Used materials

- Rhodia Zeosil MP1165 precipitated silica (specific surface area BET 160 m²/g) produced by Rhodia
- Coupling agent (APTES): (3-aminopropyl)triethoxysilane H₂N(CH₂)₃Si(OC₂H₅)₃ (99%) produced by Sigma Aldrich;
- ferric sulphate (Fe₂(SO₄)₃*xH₂O) produced by Sigma Aldrich
- Toluene (99%) produced by Alfa Aesar;
- Anhydrous ethanol EtOH (99.9%) produced by Scharlau.

The preparation consists of a two-step process, in which first of all the silica is functionalised with the coupling agent and after recovery, the anhydrous powder is reacted with an iron precursor (hydrated ferric sulphate) to bind the iron in ionic form (Fe³⁺) through the formation of the chelate with the coordinating groups GC.

### First step

In a 50 ml flask, 1 g of SiO₂ powder was dispersed under stirring in 25 ml of toluene for ten minutes at 120°C. Then, 0.394 ml of (3-aminopropyl)triethoxysilane (APTES) were added to the dispersion, calculated in such a way as to have a molar ratio between the APTES and the number of hydroxyl groups on the silica surface equal to 1:2, and the reaction was maintained at 120°C for 24 hours (reflux condition) under stirring. After cooling, the reaction product (SiO₂-APTES) was recovered by vacuum filtration, washed twice with fresh toluene and dried in an oven at 80°C for one night.

The above preparation and the characterisation with ATR-FTIR, TGA and CHNS analysis of the functionalised silica obtained in the first step (SiO₂-APTES) are similar to what described in WO 2020/110023, in the name of the Applicant, and in S. Mostoni et al., "Design of a Zn Single-Site Curing Activator for a More Sustainable Sulfur Cross-Link Formation in Rubber" Ind. Eng. Chem. Res. 2021, 60, 10180-10192.

The TGA and CHNS analysis allowed the functionalisation of the silica following the reaction with APTES to be confirmed, with the results summarised in the following Table A.

**TABLE A**

| Surface coating degree (% by weight) | n. APTES molecules/nm² | Reaction yield (%) | N% (TGA) | N% (CHNS) |
|---|---|---|---|---|
| 7.6 | 5.23 | 76 | 1.78 | 1.51 |

### Second step

1 g of the functionalised silica obtained in the first step (SiO₂-APTES) was dispersed in 50 mL of ethanol under stirring for 20 minutes at 100°C, so as to obtain a homogeneous suspension. An adequate amount of iron precursor (Fe₂(SO₄)₃*xH₂O was then added. The quantity of iron precursor used was calculated considering a molar ratio Fe/APTES (n_{Fe (precursor)}/n_{APTES}) equal to 1:20, 1:10, 1:2, 1:1 and 2:1, assuming that the iron ions cannot be directly bound to the surface of the silica nanoparticle.

The reaction is carried out for 2 hours and after cooling, the reaction product (SiO₂-APTES-Fe) was separated by filtration under vacuum and washed twice with fresh ethanol, to eliminate the unreacted salt, and dried at 80°C for 12 hours.

In this way, five different catalysts named SiO₂-APTESₓ-Fe_{Y} were prepared, in which the indices Y and X refer respectively to the nominal molar ratio Fe/APTES used during the synthesis reaction (n_{Fe (precursor)}/n_{APTES}).

### Characterisation of the materials obtained

### ICP-OES - Inductively Coupled Plasma Optical Emission Spectrometry Analysis

This characterisation technique allowed the determination of the amount of Fe³⁺ ion anchored on the silica nanoparticle by means of the amine ligand (APTES), and allowed the estimation of the type of metal-ligand coordination by means of the analysis of materials prepared with different of iron starting from a different content of metal precursor.

ICP analyses were performed using a Perkin Elmer Optima 7000 DV spectrometer (Software control WinLab32), coupled to a microwave digestion system. For each analysis, the samples were prepared by finely grinding 0.2 g of powder material which was subsequently dissolved in an acid solution composed of 4mL of HNO₃, 3 mL of HCl and 1 mL of HF. The sample was then treated in the digestion system with the following steps: i) 8 minutes, 160°C, ii) 5 minutes, 200°C, iii) 20 minutes, 200°C. The solution was diluted with 12 mL of milliQ water, and finally 15 mL of this solution was further diluted 1:100, and introduced into the ICP instrument for analysis. The vaporised sample was transported inside the plasma source by a constant flow of argon of 20L/min.

The following Table B indicates the number of Fe³⁺ ions and APTES molecules determined by ICP and TGA measurements for each of the five prepared catalysts.

**TABLE B**

| Sample | nFe precursor/ nAPTES | Fe% | Fe (atoms/nm²) | APTES (molecules/nm²) | n_{Fe}/n_{APTES} |
|---|---|---|---|---|---|
| SiO₂-APTES₂₀-Fe₁ | 0.05 | 0.23 | 0.23 | 5.23 | 0.04 |
| SiO₂-APTES₁₀-Fe₁ | 0.1 | 0.51 | 0.44 | 5.23 | 0.08 |
| SiO₂-APTES₂-Fe₁ | 0.5 | 2.90 | 2.93 | 5.23 | 0.56 |
| SiO₂-APTES₁-Fe₁ | 1 | 3.90 | 3.38 | 5.23 | 0.65 |
| SiO₂-APTES₁-Fe₂ | 2 | 6.50 | 5.63 | 5.23 | 1.07 |

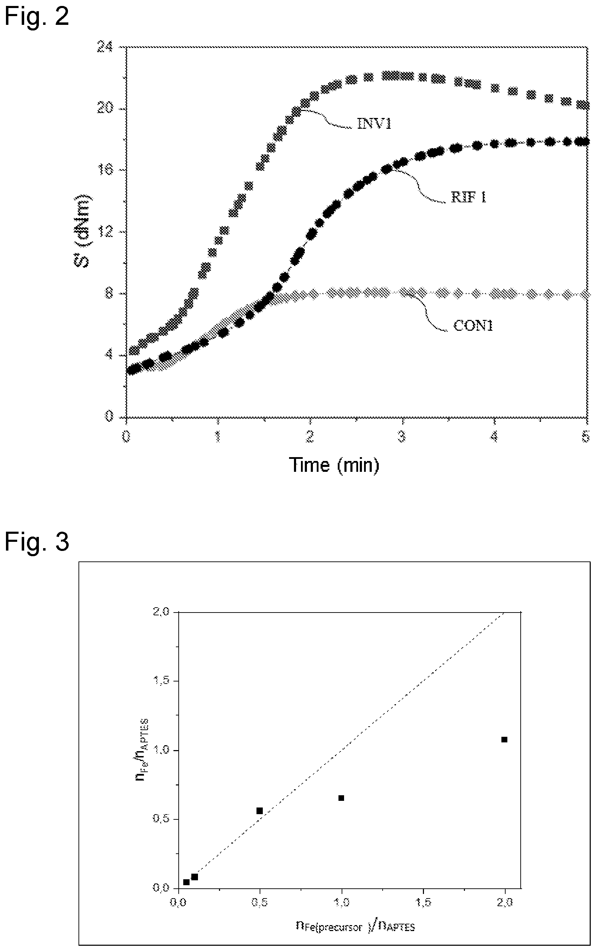

The amount of Fe³⁺ ions coordinated by the APTES molecules increased as the amount of metal precursor used during the synthesis increased. However, the highest n_{Fe}/n_{APTES} molar ratio obtained in SiO₂-APTESₓ-Fe_{Y} materials is always about 1, even in the presence of an excess of iron, while up to n_{Fe}/n_{APTES} = 0.5 the calculated molar ratios (n_{Fe}/n_{APTES}) and the nominal ones (n_{Fe (precursor)}/n_{APTES}) are almost coincident (Figure 3). This trend suggests that in SiO₂-APTESₓ-Fe_{Y}, the iron metal centres are preferentially coordinated by a silica-anchored APTES molecule, even if a double coordination cannot be excluded when the amount of iron used during the synthesis is in defect compared to that of APTES.

### TEM - Transmission electron microscopy analysis

The morphology of the activator was studied by TEM and TEM-EDX analyses, the latter of which allows in particular the elemental composition of the material to be investigated.

The analyses were performed using a Jeol Jem - 2100 plus TEM transmission electron microscope operating at 200 kV, with a Gatan Rio^{™} complementary metal oxide semiconductor (CMOS) camera, 8 megapixel. The analysed powder samples were supported on specific copper grids for TEM analysis.

From the analyses carried out, a substantially homogeneous distribution of iron was observed on the surface of the silica particles, with the presence of sulphur ions which could derive from residual sulphate groups of the metal precursor, which probably remain within the coordination sphere of the metal but do not affect the reactivity thereof.

### EXAMPLE 2

### Preparation of the elastomeric compound

The following Table 1 shows the formulations of the reference compound (RIF1) comprising silica and zinc oxide, of the comparison compound (CON1) comprising silica and ferric sulphate as such, and of the compound according to the present invention (INV1) comprising the vulcanisation activator SiO₂-APTES₂-Fe₁ with a molar ratio Fe/APTES 1:2 prepared as described in Example 1.

The reference compound (RIF1) is a conventional compound commonly used in the production of tyre components, the comparison compound (CON1) is a compound made to demonstrate the inactivity of common iron salts with respect to the vulcanisation activator used in the compound of the invention (INV1).

**TABLE 1**

| Component | RIF1 | CON1 | INV1 |
|---|---|---|---|
| IR | 100 | 100 | 100 |
| Silica | 48.0 | 48.0 | 2.2 |
| Silane | 3.84 | 3.84 | 0.18 |
| 6PPD | 2 | 2 | 2 |
| Stearic acid | 2 | 2 | - |
| ZnO | 1.85 | - | - |
| Ferric sulphate | - | 10.66 | - |
| SiO₂-APTES₂-Fe₁ | - | - | 50.87 |
| CBS | 1.6 | 1.6 | 1.6 |
| Sulphur (67%) | 3 | 3 | 3 |

| | | | |
|---|---|---|---|
| IR: high-cis synthetic polyisoprene (min. 96%), obtained by polymerisation in solution with Ziegler/Natta catalyst; Supplier NIZHNEKAMSKNEFTECHIM EXPORT; Silica: ZEOSIL 1115 MP (specific surface area BET 95-120 m²/g, white microbeads obtained by precipitation from sodium silicate solutions with sulphuric acid. It does not contain crystalline silica. Supplier SOLVAY RHODIA OPERATIONS Silane: TESPD Bis-(3-triethoxy-silyl-propyl)disulphide, Supplier JINGZHOU JIANGHAN FINE CHEM 6PPD: N-(1,3-dimethylbutyl)-N'-phenyl-p-phenylenediamine, Supplier: SOLUTIA/EASTMAN Stearic acid: Supplier TEMIX OLEO SRL ZnO (80): 80% zinc oxide, 20% polymeric binder and dispersing agent, Supplier LANXESS ADD Ferric sulphate: Fe₂(SO₄)₃*xH₂O produced by Sigma Aldrich CBS: N-cyclohexyl-2-benzothiazilsulphenamide, cyclohexylamine content <1%, DUSLO Supplier Sulphur: Crystex OT33 amorphous sulphur, insoluble in CS₂ and in toluene. Treated with 33% hydrotreated heavy naphthenic distillate (petroleum), Supplier EASTMAN. | | | |

All the components, except for sulphur and the accelerant (CBS) were mixed together in an internal mixer (model Pomini PL 1.6) for about 5 minutes (1^{st} step). As soon as the temperature reached 145±5°C, the elastomeric compound was unloaded. Sulphur and the accelerant (CBS) were then added and mixing was performed in an open roll mixer (2^{nd} step).

Using the compounds of Table 1, specimens were made on which the MDR rheometric measurements and the (shear) dynamic moduli G were carried out as described above.

The results are summarised in the following Table 2.

**TABLE 2**

| | RIF1 | CON1 | INV1 | Δ INV1 vs RIF1 (%) | Δ INV1 vs CON1 (%) |
|---|---|---|---|---|---|
| MH (dN*m) | 18 | 8 | 22 | 22.2% | 175.0% |
| T30 (min) | 1.5 | 1 | 1 | -33.3% | 0.0% |
| T100 (min) | 5 | 3 | 2.5 | -50.0% | -16.7% |
| G' (9%) (MPa) | 1.7 | 1 | 2.25 | 32.4% | 125.0% |
| TanDelta(9%) | 0.1 | 0.22 | 0.09 | -10.0% | -59.1% |
| G' (3%) (MPa) | 1.9 | 1.4 | 2.4 | 26.3% | 71.4% |
| TanDelta(3%) | 0.1 | 0.2 | 0.07 | -30.0% | -65.0% |

The results demonstrated that the compound of the invention (INV1) comprising the vulcanisation activator of the invention SiO₂-APTES₂-Fe₁ had a high vulcanisation efficiency, not only compared to the comparison compound (CON1) comprising a common salt of Fe³⁺, but also with respect to the reference compound comprising the conventional zinc-based vulcanisation activator.

The high G' (3%) and G' (9%) values were indicative of a high elasticity of the compound, predictive of a high tyre response and therefore a greater performance during its use. The low values of Tan Delta (3%) and (9%) were instead indicative of a low hysteresis and therefore a low rolling resistance value of the tyre.

The Fe₂(SO₄)₃ alone, i.e. without forming a metal complex with organic ligands anchored on the silica surface, was not able to activate the vulcanisation process, since low torque values were obtained and consequently bad mechanical properties.

The obtained results confirmed that the vulcanisation activator SiO₂-APTES₂-Fe₁ has a decisive effect on the vulcanisation efficiency, leading to the development of a heterogeneous catalyst which acted as a dual function filler, whose chemical nature can modulate the final properties of the material.

Figure 2 shows the Cartesian graph relating to the vulcanisation curves of the elastomeric compounds RIF1, CON1 and INV1.

By the use of the compound of the present invention as a vulcanisation activator, a complete and homogeneous dispersion of the iron was obtained with undoubted advantages in the subsequent vulcanisation reaction. Furthermore, the absence of zinc made these compounds sustainable from an environmental point of view, avoiding the release of zinc, toxic for aquatic organisms, into the environment.

### EXAMPLE 3

### Preparation of the elastomeric compound

The following Table 3 shows the formulations of the reference compounds (RIF2 and RIF3) comprising silica and variable quantities of zinc oxide, and of the compound according to the present invention (INV2) comprising the vulcanisation activator SiO₂-APTES₂-Fe₁ with a molar ratio Fe/APTES 1:2 prepared as described in Example 1 and without vulcanisation accelerant (CBS).

**TABLE 3**

| Component | RIF2 | RIF3 | INV2 |
|---|---|---|---|
| IR | 100 | 100 | 100 |
| Silica | 70.0 | 70.0 | - |
| Silane | 5 | 5 | - |
| TMQ | 1.3 | 1.3 | 1.3 |
| 6PPD | 2 | 2 | 2 |
| Stearic acid | 3 | 5 | - |
| ZnO | 2 | 3 | - |
| SiO₂-APTES₂-Fe₁ | - | - | 77.00 |
| CBS | 1 | 1 | - |
| PVI | 0.3 | 0.3 | 0.3 |
| Sulphur (67%) | 5 | 5 | 5 |

| | | | |
|---|---|---|---|
| IR: high-cis synthetic polyisoprene (min. 96%), obtained by polymerisation in solution with Ziegler/Natta catalyst; Supplier NIZHNEKAMSKNEFTECHIM EXPORT; Silica: ZEOSIL 1115 MP (specific surface area BET 95-120 m²/g, white microbeads obtained by precipitation from sodium silicate solutions with sulphuric acid. It does not contain crystalline silica. Supplier SOLVAY RHODIA OPERATIONS Silane: TESPD Bis-(3-triethoxy-silyl-propyl)disulphide, Supplier JINGZHOU JIANGHAN FINE CHEM TMQ: 2,2,4-trimethyl-1,2-dihydroquinoline polymerised trade name Vulkanox HS/LG from Lanxess. 6PPD: N-(1,3-dimethylbutyl)-N'-phenyl-p-phenylenediamine, Supplier: SOLUTIA/EASTMAN Stearic acid: Supplier TEMIX OLEO SRL ZnO (80): 80% zinc oxide, 20% polymeric binder and dispersing agent, Supplier LANXESS ADD CBS: N-cyclohexyl-2-benzothiazilsulphenamide, cyclohexylamine content <1%, DUSLO Supplier PVI: N-cyclohexyl thiophthalimide, Supplier Solutia Sulphur: Crystex OT33 amorphous sulphur, insoluble in CS₂ and in toluene. Treated with 33% hydrotreated heavy naphthenic distillate (petroleum), Supplier EASTMAN. | | | |

All the components, except for sulphur and the accelerant (CBS) were mixed together in an internal mixer (model Pomini PL 1.6) for about 5 minutes (1^{st}step). As soon as the temperature reached 145±5°C, the elastomeric compound was unloaded. Sulphur and the accelerant (CBS), if contemplated, were then added and mixing was performed in an open roll mixer (2^{nd} step).

Using the compounds of Table 3, specimens were made on which the MDR rheometric measurements and the static moduli CA0.1, CA0.5 and CA1 were carried out as described above.

The results are summarised in the following Table 4.

**TABLE 4**

| | RIF2 | RIF3 | INV2 | Δ INV2 vs RIF2 (%) | Δ INV2 vs RIF3 (%) |
|---|---|---|---|---|---|
| MH (dN*m) | 34.1 | 32.26 | 42.32 | 24.1% | 31.2% |
| Ca0.1 (MPa) | 0.78 | 0.81 | 0.96 | 23.1% | 18.5% |
| Ca0.5 (MPa) | 1.53 | 1.67 | 1.66 | 8.5% | -0.6% |
| Ca1 (MPa) | 2.27 | 2.71 | 2.51 | 10.6% | -7.4% |

The maximum torque results (MH) demonstrated an excellent vulcanisation efficiency of the compound of the invention (INV2) comprising the vulcanisation activator of the invention SiO₂-APTES₂-Fe₁ even in the absence of accelerant, compared to the reference compounds (RIF2 and RIF3) comprising different quantities of conventional zinc-based vulcanisation activator.

The compound of the invention (INV2) showed higher values of Ca0.1, Ca0.5, Ca1 than the reference compounds (RIF2 and RIF3), indicative of a good elasticity of the compound and predictive of good response properties and handling of the tyre in conditions of use, and of a greater durability of the same.

### EXAMPLE 4

### Preparation of the elastomeric compound

The following Table 5 shows the formulations of the reference compounds (RIF4 and RIF5) comprising silica and variable quantities of zinc oxide, and of the compound according to the present invention (INV3) comprising the vulcanisation activator SiO₂-APTES₂-Fe₁ with a molar ratio Fe/APTES 1:2 prepared as described in Example 1.

In this test all the compounds are without vulcanisation accelerant (CBS).

**TABLE 5**

| Component | RIF4 | RIF5 | INV3 |
|---|---|---|---|
| IR | 100 | 100 | 100 |
| Silica | 70.0 | 70.0 | - |
| Silane | 5 | 5 | - |
| TMQ | 1.3 | 1.3 | 1.3 |
| 6PPD | 3 | 3 | 3 |
| Stearic acid | 3 | 5 | - |
| ZnO | 2 | 3 | - |
| SiO₂-APTES₂-Fe₁ | - | - | 77.00 |
| PVI | 0.3 | 0.3 | 0.3 |
| Sulphur (67%) | 4.5 | 4.5 | 4.5 |

| | | | |
|---|---|---|---|
| IR: high-cis synthetic polyisoprene (min. 96%), obtained by polymerisation in solution with Ziegler/Natta catalyst; Supplier NIZHNEKAMSKNEFTECHIM EXPORT; Silica: ZEOSIL 1115 MP (specific surface area BET 95-120 m²/g, white microbeads obtained by precipitation from sodium silicate solutions with sulphuric acid. It does not contain crystalline silica. Supplier SOLVAY RHODIA OPERATIONS Silane: TESPD Bis-(3-triethoxy-silyl-propyl)disulphide, Supplier JINGZHOU JIANGHAN FINE CHEM TMQ: 2,2,4-trimethyl-1,2-dihydroquinoline polymerised trade name Vulkanox HS/LG from Lanxess. 6PPD: N-(1,3-dimethylbutyl)-N'-phenyl-p-phenylenediamine, Supplier: SOLUTIA/EASTMAN Stearic acid: Supplier TEMIX OLEO SRL ZnO (80): 80% zinc oxide, 20% polymeric binder and dispersing agent, Supplier LANXESS ADD PVI: N-cyclohexyl thiophthalimide, Supplier Solutia Sulphur: Crystex OT33 amorphous sulphur, insoluble in CS₂ and in toluene. Treated with 33% hydrotreated heavy naphthenic distillate (petroleum), Supplier EASTMAN. | | | |

All the components, except for sulphur were mixed together in an internal mixer (model Pomini PL 1.6) for about 5 minutes (1^{st} step). As soon as the temperature reached 145±5°C, the elastomeric compound was unloaded. Sulphur was then added and mixing was performed in an open roll mixer (2^{nd} step).

Using the compounds of Table 5, specimens were made on which the MDR rheometric measurements and the static moduli CA0.1, CA0.5, CA1 and CA3 were carried out as described above.

The results are summarised in the following Table 6.

**TABLE 6**

| | RIF4 | RIF5 | INV3 | Δ INV3 vs RIF4 (%) | Δ INV3 vs RIF5 (%) |
|---|---|---|---|---|---|
| MH (dN*m) | 30.6 | 28.4 | 42.32 | 38.3% | 49.0% |
| TS2 (min) | 0.44 | 0.49 | 0.53 | 20.5% | 8.2% |
| T30 (min) | 1.58 | 1.71 | 2.27 | 43.7% | 32.7% |
| Ca0.1 (MPa) | 0.86 | 0.82 | 0.96 | 11.6% | 17.1% |
| Ca0.5 (MPa) | 1.33 | 1.23 | 1.66 | 24.8% | 35.0% |
| Ca1 (MPa) | 1.75 | 1.56 | 2.51 | 43.4% | 60.9% |
| Ca3 (MPa) | 5.99 | 5.2 | 7.37 | 23.0% | 41.7% |

The values of maximum torque (MH) and of the static moduli (Ca0.1, Ca0.5, Ca1 and Ca3) of the compound of the invention (INV3) showed a significant increase in the characteristic values of the vulcanisation and of how the vulcanisation activator of the invention SiO₂-APTES₂-Fe₁ played a crucial role both in the mechanical properties and in the vulcanisation kinetics, as demonstrated by the values of TS2 and T30.

The data of Table 6 confirmed that SiO₂-APTES₂-Fe₁ is a complete and efficient vulcanisation activator, even in the absence of vulcanisation accelerants.

### EXAMPLE 5

### Preparation of the elastomeric compound

The following Table 7 shows the formulations of the reference compounds (RIF6 and RIF7) comprising silica and zinc oxide, and of the compound according to the present invention (INV4) comprising the vulcanisation activator SiO₂-APTES₂-Fe₁ with a molar ratio Fe/APTES of 1:2 prepared as described in Example 1 and without vulcanisation accelerant (CBS).

**TABLE 7**

| Component | RIF6 | RIF7 | INV4 |
|---|---|---|---|
| IR | 20 | 20 | 20 |
| SBR | 80 | 80 | 80 |
| Silica | 70.0 | 70.0 | - |
| Silane | 5 | 5 | - |
| TMQ | 1.3 | 1.3 | 1.3 |
| 6PPD | 3 | 3 | 3 |
| Stearic acid | 2 | 3 | - |
| ZnO | 3 | 5 | - |
| SiO₂-APTES₂-Fe₁ | - | - | 77.00 |
| CBS | 1 | 1 | - |
| PVI | 0.3 | 0.3 | 0.3 |
| Sulphur (67%) | 4.5 | 4.5 | 4.5 |

| | | | |
|---|---|---|---|
| IR: high-cis synthetic polyisoprene (min. 96%), obtained by polymerisation in solution with Ziegler/Natta catalyst; Supplier NIZHNEKAMSKNEFTECHIM EXPORT; SBR: styrene-butadiene copolymer with 23.5% styrene obtained in emulsion, trade name KER 1500 from Synthos polymer Silica: ZEOSIL 1115 MP (specific surface area BET 95-120 m²/g, white microbeads obtained by precipitation from sodium silicate solutions with sulphuric acid. It does not contain crystalline silica. Supplier SOLVAY RHODIA OPERATIONS Silane: TESPD Bis-(3-triethoxy-silyl-propyl)disulphide, Supplier JINGZHOU JIANGHAN FINE CHEM TMQ: 2,2,4-trimethyl-1,2-dihydroquinoline polymerised trade name Vulkanox HS/LG from Lanxess. 6PPD: N-(1,3-dimethylbutyl)-N'-phenyl-p-phenylenediamine, Supplier: SOLUTIA/EASTMAN Stearic acid: Supplier TEMIX OLEO SRL ZnO (80): 80% zinc oxide, 20% polymeric binder and dispersing agent, Supplier LANXESS ADD CBS: N-cyclohexyl-2-benzothiazilsulphenamide, cyclohexylamine content <1%, DUSLO Supplier PVI: N-cyclohexyl thiophthalimide, Supplier Solutia Sulphur: Crystex OT33 amorphous sulphur, insoluble in CS₂ and in toluene. Treated with 33% hydrotreated heavy naphthenic distillate (petroleum), Supplier EASTMAN. | | | |

All the components, except for sulphur and the accelerant (CBS) were mixed together in an internal mixer (model Pomini PL 1.6) for about 5 minutes (1^{st} step). As soon as the temperature reached 145±5°C, the elastomeric compound was unloaded. Sulphur and the accelerant (CBS), if contemplated, were then added and mixing was performed in an open roll mixer (2^{nd} step).

Using the compounds of Table 7, specimens were made on which the MDR rheometric measurements, the (shear) dynamic moduli G and the static modulus CA0.1 were carried out as described above.

The results are summarised in the following Table 8.

**TABLE 8**

| | RIF6 | RIF7 | INV4 | Δ INV4 vs RIF6 (%) | Δ INV4 vs RIF7 (%) |
|---|---|---|---|---|---|
| MH (dN*m) | 36.1 | 35.4 | 44.8 | 24.1% | 26.3% |
| Ca0.1 (MPa) | 1.1 | 1.2 | 1.3 | 14.4% | 9.5% |
| G' (9%) (MPa) | 3.3 | 3.2 | 4.7 | 42.1% | 45.4% |
| G' (3%) (MPa) | 3.8 | 3.7 | 6.0 | 57.3% | 59.4% |

The results of Table 8 demonstrated that the vulcanisation activator of the invention SiO₂-APTES₂-Fe₁ showed a high vulcanisation efficiency even in compounds comprising different polymers and in the absence of an accelerant.

The indicative values of the vulcanisation of the material Ca0.1, G' and MH are all higher in the compound of the invention (INV4) than in the reference compounds (RIF6 and RIF7).

## Claims

1. A compound represented by formula (II):
WF-O-ROS-GC-Fe (II)
wherein WF represents the white filler, O represents one or more oxygen bridge bonds, ROS represents an organo-silane residue, GC represents one or more coordinating groups forming a chelate with iron in ionic form, and Fe represents iron in ionic form (Fe³⁺) coordinated with the coordinating groups.

2. The compound according to claim 1, wherein said white filler WF is selected from the group consisting of silica and silicates in the form of fibres, lamellae or granules.

3. The compound according to claim 2, wherein said white filler WF is selected from the group that consists of bentonite, nontronite, beidellite, volkonskoite, hectorite, saponite, sauconite, vermiculite, sericite, sepiolite, paligorskite also known as attapulgite, montmorillonite, alloisite, possibly modified by acid treatment and/or derivatised, and mixtures thereof.

4. The compound according to claim 1, wherein said coordinating groups (GC) are linear or branched alkyl chains comprising one or more heteroatoms inside or at the end of the alkyl chain.

5. The compound according to claim 4, wherein said coordinating groups GC are functional groups represented by the formula -CₙH₂ₙ-X-CₘH₂ₘ-Y or -CₘH₂ₘ-Y, wherein n and m, equal or different from each other, are an integer from 1 to 6 inclusive, X is a group selected from mercapto and amino, and Y is a group selected from mercapto, amino, dithiocarbamate, and carboxyl.

6. A process for preparing the compound of formula (II) according to claim 1, wherein said process comprises at least:
• providing a white filler (WF)
• providing a coupling agent having the following formula (I):
GR-ROS-GC (I)
wherein GR represents one or more reactive groups capable of forming oxygen (-O-) bridges with the surface of said white filler, ROS represents a organo-silane residue, and GC represents one or more coordinating groups,
• providing an iron precursor in ionic form (Fe³⁺),
• reacting the white filler (WF) with one or more reactive groups (GR) of said compound of formula (I) so as to form oxygen (-O-) bridges between said white filler and said organo-silane residue (ROS),
• reacting one or more coordinating groups (GC) of said compound of formula (I) with the iron precursor in ionic form (Fe³⁺) so as to form a chelate, and
• separating the resulting compound of formula (II) WF-O-ROS-GC-Fe.

7. The process according to claim 6, wherein said white filler WF is selected from the group consisting of silica and silicates in the form of fibres, lamellae or granules.

8. The process according to claim 7, wherein said white filler WF is selected from the group that consists of bentonite, nontronite, beidellite, volkonskoite, hectorite, saponite, sauconite, vermiculite, sericite, sepiolite, paligorskite also known as attapulgite, montmorillonite, alloisite, possibly modified by acid treatment and/or derivatised, and mixtures thereof.

9. The process according to claim 6, wherein said coordinating groups (GC) are linear or branched alkyl chains comprising one or more heteroatoms inside or at the end of the alkyl chain.

10. The process according to claim 9, wherein said coordinating groups GC are functional groups represented by the formula -CₙH₂ₙ-X-CₘH₂ₘ-Y or -CₘH₂ₘ-Y, wherein n and m, equal or different from each other, are an integer from 1 to 6 inclusive, X is a group selected from mercapto and amino, and Y is a group selected from mercapto, amino, dithiocarbamate, and carboxyl.

11. The process according to claim 6, wherein said reactive groups GR are alkoxy groups having 1 to 4 carbon atoms.

12. The process according to claim 6, wherein said coupling agent is represented by the general formulas (Ia) or (Ib):
(R)₃Si-CₙH₂ₙ-X-CₘH₂ₘ-Y (Ia)
(R)₃Si-CₘH₂ₘ-Y (Ib)
wherein R groups, equal or different from each other, are selected from alkyl or alkoxy groups having from 1 to 4 carbon atoms, provided at least one of the R groups is an alkoxy group; n and m, equal or different from each other, are an integer from 1 to 6 inclusive; X is a group selected from mercapto and amino, and Y is a group selected from mercapto, amino, dithiocarbamate, and carboxylic

13. The process according to claim 6, wherein said coupling agent is selected from the group consisting of (3-aminopropyl)triethoxysilane (APTES), N-(2-aminoethyl)-3-aminopropyl-trimethoxysilane (also known as N-[3-(trimethoxysilyl)propyl]ethylenediamine (EDTMS)), N-(2-aminoethyl)-3-aminopropyl-triethoxysilane, N-(2-aminoethyl)-3-aminopropyl-methyl-dimethoxysilane, 3-aminopropylmethyl-diethoxysilane, 3-ureidopropyl-trimethoxy silane, 3-ureidopropyl-triethoxysilane, N-cyclohexyl(aminomethyl)methyl diethoxysilane, N-cyclohexyl(aminomethyl) triethoxysilane, N-cyclohexyl-3-aminopropyl-trimethoxysilane, 3-(2-aminomethylamino)propyl-triethoxysilane, N-(n-butyl)-3-aminopropyltrimethoxy-silane, N-(2-aminoethyl)-3-aminopropylmethyl diethoxysilane, N-(2-aminoethyl)-3-aminoisobutyl-methyldimethoxysilane, 3-aminopropylmethyldimethoxysilane, 3-(2-(2-aminoethylamino)ethylamino)propyl-trimethoxysilane, N-(n-butyl)-3-aminopropyl-triethoxysilane, N,N-diethylamino propyl-trimethoxysilane, N,N-dimethylaminopropyl-trimethoxysilane, butylaminomethyl-triethoxysilane, N-cyclohexyl(aminomethyl) trimethoxy-silane, 2-aminoethylaminomethyl-triethoxysilane, diethylaminomethyl-triethoxysilane, (3-mercaptopropyl)triethoxysilane and (3-mercaptopropyl)trimethoxysilane.

14. The process according to claim 13, wherein said coupling agent is selected from the group consisting of (3-mercaptopropyl)trimethoxysilane, (3-aminopropyl)triethoxysilane (APTES), (3-aminopropyl)trimethoxysilane, N-(2-aminoethyl)-3-aminopropyltrimethoxysilane (also known as N-[3-(trimethoxysilyl)propyl]ethylenediamine (EDTMS)), and N-(2-aminoethyl)-3-aminopropyltriethoxysilane.

15. The process according to claim 6, wherein said iron precursor in ionic form (Fe³⁺) is selected from the group consisting of ferric oxide (Fe₂O₃), ferric hydroxide (Fe(OH)₃), and organic or inorganic salts of Fe³⁺.

16. The process according to claim 15, wherein said organic or inorganic salts of iron are selected from the group that consists of ferric nitrate, ferric sulphate, ferric carbonate, ferric chloride, ferric bromide, ferric iodide, ferric fluoride, ferric phosphate, ferric acetate, ferric oxalate, ferric citrate, ferric gluconate, ferric fumarate, and ferric lactate.

17. A process for the preparation of a vulcanisable elastomeric compound for tyres, wherein said process comprises at least:
• a mixing step (1) of at least one elastomeric polymer and of at least one additive for elastomeric compounds, with the exception of a vulcanising agent, to give a non-vulcanisable elastomeric compound;
• a mixing step (2) of the non-vulcanisable elastomeric compound and of at least one vulcanising agent, to give a vulcanisable elastomeric compound, and
• a step of unloading of the vulcanisable elastomeric compound,
wherein in at least one of said mixing steps (1) and (2) is added the compound of formula (II) according to claim 1.

18. A vulcanisable elastomeric compound obtained according to the process of claim 17.

19. A tyre component comprising the vulcanisable compound of claim 18 or the vulcanised compound obtained by vulcanisation thereof.

20. A tyre for vehicle wheels comprising a component as claimed in claim 19.

## Patentansprüche

1. Verbindung, die dargestellt ist durch eine Formel (II):
WF-O-ROS-GC-Fe (II)
wobei WF den weißen Füllstoff darstellt, O eine oder mehrere Sauerstoffbrückenbindungen darstellt, ROS einen Organosilanrest darstellt, GC eine oder mehrere koordinierende Gruppen darstellt, die ein Chelat mit Eisen in ionischer Form ausbilden, und Fe Eisen in ionischer Form (Fe³⁺) darstellt, das mit den koordinierenden Gruppen koordiniert ist.

2. Verbindung nach Anspruch 1, wobei der weiße Füllstoff WF aus der Gruppe ausgewählt ist, bestehend aus Siliciumdioxid und Silikaten in der Form von Fasern, Lamellen oder Granulaten.

3. Verbindung nach Anspruch 2, wobei der weiße Füllstoff WF ausgewählt ist aus der Gruppe, die aus Bentonit, Nontronit, Beidellit, Volkonskoit, Hectorit, Saponit, Sauconit, Vermiculit, Sericit, Sepiolith, Palygorskit, auch bekannt als Attapulgit, Montmorillonit, Alloisit, gegebenenfalls modifiziert durch Säurebehandlung und/oder derivatisiert, und Mischungen davon besteht.

4. Verbindung nach Anspruch 1, wobei die koordinierenden Gruppen (GC) lineare oder verzweigte Alkylketten sind, umfassend ein oder mehrere Heteroatome innerhalb oder an dem Ende der Alkylkette.

5. Verbindung nach Anspruch 4, wobei die koordinierenden Gruppen GC funktionelle Gruppen sind, die durch die Formel -CₙH₂ₙ-X-CₘH₂ₘ-Y oder -CₘH₂ₘ-Y dargestellt sind, wobei n und m, gleich oder unterschiedlich voneinander, eine ganze Zahl von 1 bis einschließlich 6 sind, X eine Gruppe ist, die aus Mercapto und Amino ausgewählt ist, und Y eine Gruppe ist, die aus Mercapto, Amino, Dithiocarbamat und Carboxyl ausgewählt ist.

6. Verfahren zum Herstellen der Verbindung von Formel (II) nach Anspruch 1, wobei das Verfahren mindestens umfasst:
• Bereitstellen eines weißen Füllstoffs (WF)
• Bereitstellen eines Kopplungsmittels, das die folgende Formel (I) aufweist:
GR-ROS-GC (I)
wobei GR eine oder mehrere reaktive Gruppen darstellt, die in der Lage sind, Sauerstoff(-O-)-Brücken mit der Oberfläche des weißen Füllstoffs auszubilden, ROS einen Organosilanrest darstellt und GC eine oder mehrere koordinierende Gruppen darstellt,
• Bereitstellen eines Eisenvorläufers in ionischer Form (Fe³⁺),
• Reagieren des weißen Füllstoffs (WF) mit einer oder mehreren reaktiven Gruppen (GR) der Verbindung von Formel (I), um Sauerstoff(-O-)-Brücken zwischen dem weißen Füllstoff und dem Organosilanrest (ROS) auszubilden,
• Reagieren einer oder mehrerer koordinierender Gruppen (GC) der Verbindung von Formel (I) mit dem Eisenvorläufer in ionischer Form (Fe³⁺), um ein Chelat auszubilden, und
• Abtrennen der resultierenden Verbindung von Formel (II) WF-O-ROS-GC-Fe.

7. Verfahren nach Anspruch 6, wobei der weiße Füllstoff WF aus der Gruppe ausgewählt ist, bestehend aus Siliciumdioxid und Silikaten in der Form von Fasern, Lamellen oder Granulaten.

8. Verfahren nach Anspruch 7, wobei der weiße Füllstoff WF aus der Gruppe ausgewählt ist, die aus Bentonit, Nontronit, Beidellit, Volkonskoit, Hectorit, Saponit, Sauconit, Vermiculit, Sericit, Sepiolith, Palygorskit, auch bekannt als Attapulgit, Montmorillonit, Alloisit, gegebenenfalls modifiziert durch Säurebehandlung und/oder derivatisiert, und Mischungen davon besteht.

9. Verfahren nach Anspruch 6, wobei die koordinierenden Gruppen (GC) lineare oder verzweigte Alkylketten sind, umfassend ein oder mehrere Heteroatome innerhalb oder an dem Ende der Alkylkette.

10. Verfahren nach Anspruch 9, wobei die koordinierenden Gruppen GC funktionelle Gruppen sind, die durch die Formel -CₙH₂ₙ-X-CₘH₂ₘ-Y oder -CₘH₂ₘ-Y dargestellt werden, wobei n und m, gleich oder unterschiedlich voneinander, eine ganze Zahl von 1 bis einschließlich 6 sind, X eine Gruppe ist, die aus Mercapto und Amino ausgewählt ist, und Y eine Gruppe ist, die aus Mercapto, Amino, Dithiocarbamat und Carboxyl ausgewählt ist.

11. Verfahren nach Anspruch 6, wobei die reaktiven Gruppen GR Alkoxygruppen sind, die 1 bis 4 Kohlenstoffatome aufweisen.

12. Verfahren nach Anspruch 6, wobei das Kopplungsmittel durch die allgemeinen Formeln (la) oder (lb) dargestellt wird:
(R)₃Si-CₙH₂ₙ-X-CₘH₂ₘ-Y (la)
(R)₃Si-CₘH₂ₘ-Y (lb)
wobei R-Gruppen, gleich oder unterschiedlich voneinander, aus Alkyl- oder Alkoxygruppen ausgewählt sind, die 1 bis 4 Kohlenstoffatome aufweisen, vorausgesetzt, dass mindestens eine der R-Gruppen eine Alkoxygruppe ist; n und m, gleich oder unterschiedlich voneinander, eine ganze Zahl von 1 bis einschließlich 6 sind; X eine Gruppe ist, die aus Mercapto und Amino ausgewählt ist, und Y eine Gruppe ist, die aus Mercapto, Amino, Dithiocarbamat und Carboxyl ausgewählt ist.

13. Verfahren nach Anspruch 6, wobei das Kopplungsmittel aus der Gruppe ausgewählt ist, bestehend aus (3-Aminopropyl)triethoxysilan (APTES), N-(2-Aminoethyl)-3-aminopropyl-trimethoxysilan (auch bekannt als N-[3-(Trimethoxysilyl)propyl]ethylendiamin (EDTMS)), N-(2-Aminoethyl)-3-aminopropyl-triethoxysilan, N-(2-Aminoethyl)-3-aminopropyl-methyl-dimethoxysilan, 3-Aminopropylmethyl-diethoxysilan, 3-Ureidopropyl-trimethoxysilan, 3-Ureidopropyltriethoxysilan, N-Cyclohexyl(aminomethyl)methyldiethoxysilan, N-Cyclohexyl(aminomethyl)triethoxysilan, N-Cyclohexyl-3-aminopropyl-trimethoxysilan, 3-(2-Aminomethylamino)propyl-triethoxysilan, N-(n-Butyl)-3-aminopropyltrimethoxysilan, N-(2-Aminoethyl)-3-aminopropylmethyldiethoxysilan, N-(2-Aminoethyl)-3-aminoisobutyl-methyldimethoxysilan, 3-Aminopropylmethyldimethoxysilan,3-(2-(2-Aminoethylamino)ethylamino)propyl-trimethoxysilan, N-(n-Butyl)-3-aminopropyl-triethoxysilan, N,N-Diethylaminopropyl-trimethoxysilan, N,N-Dimethylaminopropyl-trimethoxysilan, Butylaminomethyltriethoxysilan, N-Cyclohexyl(aminomethyl)trimethoxysilan, 2-Aminoethylaminomethyl-triethoxysilan, Diethylaminomethyl-triethoxysilan, (3-Mercaptopropyl)triethoxysilan und (3-Mercaptopropyl)trimethoxysilan.

14. Verfahren nach Anspruch 13, wobei das Kopplungsmittel aus der Gruppe ausgewählt ist, bestehend aus (3-Mercaptopropyl)trimethoxysilan, (3-Aminopropyl)triethoxysilan (APTES), (3-Aminopropyl)trimethoxysilan, N-(2-Aminoethyl)-3-aminopropyltrimethoxysilan (auch bekannt als N-[3-(Trimethoxysilyl)propyl]ethylendiamin (EDTMS)) und N-(2-Aminoethyl)-3-aminopropyltriethoxysilan.

15. Verfahren nach Anspruch 6, wobei der Eisenvorläufer in ionischer Form (Fe³⁺) aus der Gruppe ausgewählt ist, bestehend aus Eisen(III)-oxid (Fe₂O₃), Eisen(III)-hydroxid (Fe(OH)₃) und organischen oder anorganischen Salzen von Fe³⁺.

16. Verfahren nach Anspruch 15, wobei die organischen oder die anorganischen Salze von Eisen aus der Gruppe ausgewählt sind, die aus Eisen(III)-nitrat, Eisen(III)-sulfat, Eisen(III)-carbonat, Eisen(III)-chlorid, Eisen(III)-bromid, Eisen(III)-iodid, Eisen(III)-fluorid, Eisen(III)-phosphat, Eisen(III)-acetat, Eisen(III)-oxalat, Eisen(III)-citrat, Eisen(III)-gluconat, Eisen(III)-fumarat und Eisen(III)-lactat besteht.

17. Verfahren für die Herstellung einer vulkanisierbaren elastomeren Verbindung für Reifen, wobei das Verfahren mindestens umfasst:
• einen Mischschritt (1) von mindestens einem elastomeren Polymer und von mindestens einem Additiv für elastomere Verbindungen, mit der Ausnahme eines Vulkanisationsmittels, um eine nicht vulkanisierbare elastomere Verbindung zu ergeben;
• einen Mischschritt (2) der nicht vulkanisierbaren elastomeren Verbindung und von mindestens einem Vulkanisationsmittel, um eine vulkanisierbare elastomere Verbindung zu ergeben, und
• einen Schritt zum Entladen der vulkanisierbaren elastomeren Verbindung, wobei in mindestens einem der Mischschritte (1) und (2) die Verbindung von Formel (II) nach Anspruch 1 zugegeben wird.

18. Vulkanisierbare elastomere Verbindung, die gemäß dem Verfahren nach Anspruch 17 erhalten wird.

19. Reifenkomponente, umfassend die vulkanisierbare Verbindung nach Anspruch 18 oder die durch eine Vulkanisation davon erhaltene vulkanisierte Verbindung.

20. Reifen für Fahrzeugräder, umfassend eine Komponente nach Anspruch 19.

## Revendications

1. Composé représenté par la formule (II) :
WF-O-ROS-GC-Fe (II)
dans lequel WF représente la charge blanche, O représente une ou plusieurs liaisons à pont d'oxygène, ROS représente un résidu organosilane, GC représente un ou plusieurs groupes de coordination formant un chélate avec du fer sous forme ionique, et Fe représente du fer sous forme ionique (Fe³⁺) coordonné avec les groupes de coordination.

2. Composé selon la revendication 1, dans lequel ladite charge blanche WF est choisie dans le groupe constitué de silice et de silicates sous la forme de fibres, de lamelles ou de granules.

3. Composé selon la revendication 2, dans lequel ladite charge blanche WF est choisie dans le groupe qui est constitué de bentonite, nontronite, beidellite, wolkonskoïte, hectorite, saponite, sauconite, vermiculite, séricite, sépiolite, paligorskite également connue sous le nom d'attapulgite, montmorillonite, halloysite, éventuellement modifiées par un traitement acide et/ou dérivées, et mélanges de celles-ci.

4. Composé selon la revendication 1, dans lequel lesdits groupes de coordination (GC) sont des chaînes alkyle linéaires ou ramifiées comprenant un ou plusieurs hétéroatomes à l'intérieur ou au niveau de l'extrémité de la chaîne alkyle.

5. Composé selon la revendication 4, dans lequel lesdits groupes de coordination GC sont des groupes fonctionnels représentés par la formule -CₙH₂ₙ-X-CₘH₂ₘ-Y ou -CₘH₂ₘ-Y, dans lequel n et m, égaux ou différents les uns par rapport aux autres, sont un nombre entier allant de 1 à 6 inclus, X est un groupe choisi parmi mercapto et amino, et Y est un groupe choisi parmi mercapto, amino, dithiocarbamate et carboxyle.

6. Procédé permettant de préparer le composé de formule (II) selon la revendication 1, dans lequel ledit procédé comprend au moins :
• la fourniture d'une charge blanche (WF)
• la fourniture d'un agent de couplage ayant la formule (I) suivante :
GR-ROS-GC (I)
dans lequel GR représente un ou plusieurs groupes réactifs capables de former des ponts d'oxygène (-O-) avec la surface de ladite charge blanche, ROS représente un résidu organosilane, et GC représente un ou plusieurs groupes de coordination,
• la fourniture d'un précurseur de fer sous forme ionique (Fe³⁺),
• la réaction de la charge blanche (WF) avec un ou plusieurs groupes réactifs (GR) dudit composé de formule (I) de façon à former des ponts d'oxygène (-O-) entre ladite charge blanche et ledit résidu organosilane (ROS),
• la réaction d'un ou plusieurs groupes de coordination (GC) dudit composé de formule (I) avec le précurseur de fer sous forme ionique (Fe³⁺) de façon à former un chélate, et
• la séparation du composé de formule (II) résultant WF-O-ROS-GC-Fe.

7. Procédé selon la revendication 6, dans lequel ladite charge blanche WF est choisie dans le groupe constitué de silice et de silicates sous la forme de fibres, de lamelles ou de granules.

8. Procédé selon la revendication 7, dans lequel ladite charge blanche WF est choisie dans le groupe qui est constitué de bentonite, nontronite, beidellite, wolkonskoïte, hectorite, saponite, sauconite, vermiculite, séricite, sépiolite, paligorskite également connue sous le nom d'attapulgite, montmorillonite, halloysite, éventuellement modifiées par un traitement acide et/ou dérivées, et mélanges de celles-ci.

9. Procédé selon la revendication 6, dans lequel lesdits groupes de coordination (GC) sont des chaînes alkyle linéaires ou ramifiées comprenant un ou plusieurs hétéroatomes à l'intérieur ou au niveau de l'extrémité de la chaîne alkyle.

10. Procédé selon la revendication 9, dans lequel lesdits groupes de coordination GC sont des groupes fonctionnels représentés par la formule -CₙH₂ₙ-X-CₘH₂ₘ-Y ou -CₘH₂ₘ-Y, dans lequel n et m, égaux ou différents les uns par rapport aux autres, sont un nombre entier allant de 1 à 6 inclus, X est un groupe choisi parmi mercapto et amino, et Y est un groupe choisi parmi mercapto, amino, dithiocarbamate et carboxyle.

11. Procédé selon la revendication 6, dans lequel lesdits groupes réactifs GR sont des groupes alcoxy ayant 1 à 4 atomes de carbone.

12. Procédé selon la revendication 6, dans lequel ledit agent de couplage est représenté par les formules générales (Ia) ou (Ib) :
(R)₃Si-CₙH₂ₙ-X-CₘH₂ₘ-Y (la)
(R)₃Si-CₘH₂ₘ-Y (lb)
dans lequel les groupes R, égaux ou différents les uns par rapport aux autres, sont choisis parmi des groupes alkyle ou alcoxy ayant de 1 à 4 atomes de carbone, à condition qu'au moins l'un des groupes R soit un groupe alcoxy ; n et m, égaux ou différents les uns par rapport aux autres, sont un nombre entier allant de 1 à 6 inclus ; X est un groupe choisi parmi mercapto et amino, et Y est un groupe choisi parmi mercapto, amino, dithiocarbamate et carboxylique

13. Procédé selon la revendication 6, dans lequel ledit agent de couplage est choisi dans le groupe constitué de (3-aminopropyl)triéthoxysilane (APTES), N-(2-aminoéthyl)-3-aminopropyl-triméthoxysilane (également connu sous le nom N-[3-(triméthoxysilyl)propyl]éthylènediamine (EDTMS)), N-(2-aminoéthyl)-3-aminopropyl-triéthoxysilane, N-(2-aminoéthyl)-3-aminopropyl-méthyl-diméthoxysilane, 3-aminopropylméthyl-diéthoxysilane, 3-uréidopropyl-triméthoxysilane, 3-uréidopropyl-triéthoxysilane, N-cyclohexyl(aminométhyl)méthyl-diéthoxysilane, N-cyclohexyl(aminométhyl) triéthoxysilane, N-cyclohexyl-3-aminopropyl-triméthoxysilane, 3-(2-aminométhylamino)propyl-triéthoxysilane, N-(n-butyl)-3-aminopropyltriméthoxy-silane, N-(2-aminoéthyl)-3-aminopropylméthyl-diéthoxysilane, N-(2-aminoéthyl)-3-amino-isobutyl-méthyldiméthoxysilane, 3-aminopropylméthyldiméthoxysilane, 3-(2-(2-aminoéthylamino)éthylamino)propyl-triméthoxysilane, N-(n-butyl)-3-aminopropyl-triéthoxysilane, N,N-diéthylamino propyl-triméthoxysilane, N,N-diméthylaminopropyl-triméthoxysilane, butylaminométhyl-triéthoxysilane, N-cyclohexyl(aminométhyl)-triméthoxysilane, 2-aminoéthylaminométhyl-triéthoxysilane, diéthylaminométhyl-triéthoxysilane, (3-mercaptopropyl)triéthoxysilane et (3-mercaptopropyl)triméthoxysilane.

14. Procédé selon la revendication 13, dans lequel ledit agent de couplage est choisi dans le groupe constitué de (3-mercaptopropyl)triméthoxysilane, (3-aminopropyl)triéthoxysilane (APTES), (3-aminopropyl)triméthoxysilane, N-(2-aminoéthyl)-3-aminopropyltriméthoxysilane (également connu sous le nom N-[3-(triméthoxysilyl)propyl]éthylènediamine (EDTMS)), et N-(2-aminoéthyl)-3-aminopropyltriéthoxysilane.

15. Procédé selon la revendication 6, dans lequel ledit précurseur de fer sous forme ionique (Fe³⁺) est choisi dans le groupe constitué d'oxyde ferrique (Fe₂O₃), hydroxyde ferrique (Fe(OH)₃), et sels organiques ou inorganiques de Fe³⁺.

16. Procédé selon la revendication 15, dans lequel lesdits sels organiques ou inorganiques de fer sont choisis dans le groupe qui est constitué de nitrate ferrique, sulfate ferrique, carbonate ferrique, chlorure ferrique, bromure ferrique, iodure ferrique, fluorure ferrique, phosphate ferrique, acétate ferrique, oxalate ferrique, citrate ferrique, gluconate ferrique, fumarate ferrique et lactate ferrique.

17. Procédé destiné à la préparation d'un composé élastomère vulcanisable destiné à des pneus, dans lequel ledit procédé comprend au moins :
• une étape de mélange (1) d'au moins un polymère élastomère et d'au moins un additif pour composés élastomères, à l'exception d'un agent de vulcanisation, pour donner un composé élastomère non vulcanisable ;
• une étape de mélange (2) du composé élastomère non vulcanisable et d'au moins un agent de vulcanisation, pour donner un composé élastomère vulcanisable, et
• une étape de déchargement du composé élastomère vulcanisable, dans lequel dans au moins l'une desdites étapes de mélange (1) et (2) on ajoute le composé de formule (II) selon la revendication 1.

18. Composé élastomère vulcanisable obtenu selon le procédé de la revendication 17.

19. Composant de pneu comprenant le composé vulcanisable selon la revendication 18 ou le composé vulcanisé obtenu par vulcanisation de celui-ci.

20. Pneu destiné à des roues de véhicule comprenant un composant selon la revendication 19.
